(19) Europäisches Patentamt
European Patent Office
Office européen des brevets

(11) **EP 4 478 116 B1**

(12) **EUROPEAN PATENT SPECIFICATION**

(45) Date of publication and mention of the grant of the patent:
**01.04.2026 Bulletin 2026/14**

(21) Application number: **23753195.9**

(22) Date of filing: **10.02.2023**

(51) International Patent Classification (IPC):
***G02F 1/1333*** *(2006.01)*

(52) Cooperative Patent Classification (CPC):
**G02F 1/1339; G02F 1/13394;** G02F 1/133711; G02F 1/133719; G02F 1/133765; G02F 1/133773; G02F 2202/28

(86) International application number:
**PCT/KR2023/001953**

(87) International publication number:
**WO 2023/153848 (17.08.2023 Gazette 2023/33)**

(54) **OPTICAL DEVICE**

OPTISCHE VORRICHTUNG

DISPOSITIF OPTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.02.2022 KR 20220018465**

(43) Date of publication of application:
**18.12.2024 Bulletin 2024/51**

(73) Proprietor: **LG Chem, Ltd.**
**Yeongdeungpo-gu**
**Seoul 07336 (KR)**

(72) Inventors:
- **YOU, Jung Sun**
  **Daejeon 34122 (KR)**
- **KIM, Jung Woon**
  **Daejeon 34122 (KR)**
- **GIM, Min Jun**
  **Daejeon 34122 (KR)**
- **OH, Dong Hyun**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2022/010185**
**JP-B2- 4 839 744**
**KR-A- 20210 073 973**
**KR-A- 20220 007 333**
**KR-A- 20220 007 333**
**KR-B1- 101 962 193**
**KR-B1- 102 101 149**
**US-A1- 2020 319 504**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 478 116 B1

## Description

[Technical Field]

The present application relates to an optical device.

[Background Art]

For long-term stability and large-area scalability of a liquid crystal film cell using flexible substrates, it is important that a cell gap is maintained between upper and lower substrates and adhesion force is imparted between the upper and lower substrates.

In Non-Patent Document 1, a technique for forming an organic film pattern in the form of a column or wall with a cell gap height on one substrate and fixing it to the opposite substrate using an adhesive is disclosed. However, in such a technique, the adhesive must be located only on the column surface or wall surface, but the technique of micro-stamping the adhesive on the column surface or wall surface has high process difficulty; the control of the adhesive thickness and area is difficult; upon lamination of the upper and lower substrates, there is a high probability that the adhesive will be pushed out; and there is a risk that the adhesive may be contaminated into the alignment film or liquid crystal.

[Prior Art Documents]

[Non-Patent Documents]

"Tight Bonding of Two Plastic Substrates for Flexible LCDs" SID Symposium Digest, 38, pp. 653-656 (2007).

KR 10-2022-007333 A.

US 2020/319 504 A1 relates to a transmittance-variable film having a double-cell structure or a single-cell structure capable of suppressing formation of bubbles inside a liquid crystal layer or at the interface between a base film and a pressure-sensitive adhesive layer under high-temperature and high-humidity reliability conditions.

WO 2022/010 185 A1 discloses an optical device comprising a first outer substrate; a second outer substrate facing the first outer substrate; a liquid crystal device film positioned between the first and second outer substrates; and an intermediate layer positioned between the first outer substrate and the liquid crystal element film and between the liquid crystal element film and the second outer substrate, respectively; and wherein the intermediate layer has a total thickness of 1,600 μm or more.

[Disclosure]

[Technical Problem]

In order that the cell gap of the liquid crystal cell is maintained and the attachment force is secured between the upper substrate and the lower substrate, it may be considered that a spacer and an alignment film are formed on the lower substrate and a pressure-sensitive adhesive layer having liquid crystal orientation force and adhesion force is formed on the upper substrate, followed by lamination. However, when the liquid crystal cell is applied to an autoclave process where it is bonded together at high temperature and high pressure, there is a problem that pressing black spots are expressed. It is an object of the present application to provide an optical device which properly maintains a cell gap of a liquid crystal cell, has excellent adhesion between an upper substrate and a lower substrate, and does not express pressing black spots even after a high-temperature and high-pressure autoclave process.

[Technical Solution]

The present application relates to an optical device. The optical device comprises a liquid crystal cell. Figure 1 illustratively shows a structure of a liquid crystal cell. The liquid crystal cell comprises an upper substrate, a lower substrate, and a liquid crystal layer including a liquid crystal compound between the upper substrate and the lower substrate. The upper substrate comprise a first base layer (10a) and a first pressure-sensitive adhesive layer (10c), wherein the pressure-sensitive adhesive layer (10c) has a storage elastic modulus of 18,000 Pa or more at a temperature of 110°C and a frequency of 1 rad/sec, and a tangent delta value of 0.32 or less at a temperature of 110°C and a frequency of 1 rad/sec. The upper substrate further comprises a first electrode layer (10b) between the first base layer (10a) and the pressure-sensitive adhesive layer (10c). The lower substrate comprises a second base layer (20a) and spacers (20c). The lower substrate further comprises a second electrode layer (20b) between the second base layer (20a) and the spacers (20c). In addition, the lower substrate may further comprise an alignment film (20d) on the spacers (20c). A liquid crystal layer (30), in which a

liquid crystal compound is filled in a space between the upper substrate and the lower substrate, may exist.

As the first base layer and the second base layer, for example, an inorganic film such as a glass film, a crystalline or amorphous silicon film or a quartz or ITO (indium tin oxide) film, or a polymer film may be used.

In one example, each of the first base layer and the second base layer may be a polymer film in terms of implementation of flexible elements. As the polymer film, TAC (triacetyl cellulose); COPs (cyclo olefin copolymers) such as norbornene derivatives; PMMA (poly(methyl methacrylate)); PC (polycarbonate); PE (polyethylene); PP (polypropylene); PVA (polyvinyl alcohol); DAC (diacetyl cellulose); PA (polyacrylate); PES (poly ether sulfone); PEEK (polyetheretherketon); PPS (polyphenylsulfone), PEI (polyetherimide); PEN (polyethylenenaphthatlate); PET (polyethyleneterephtalate); PI (polyimide); PSF (polysulfone) or an amorphous fluororesin, and the like may be used, without being limited thereto. In the first base layer and the second base layer, a coating layer of gold, silver or a silicon compound such as silicon dioxide or silicon monoxide, or a functional layer such as an antireflection layer may also be present as needed.

In one example, as the first base layer and the second base layer, an optically anisotropic film may also be applied. A film having such optical anisotropy is also usually anisotropic in mechanical properties, and it is possible to provide a liquid crystal cell or optical device having superior durability and the like by utilizing such anisotropy.

In one example, the first base layer and the second base layer may each be a polymer film having an in-plane phase difference value of 4,000 nm or more for a wavelength of 550 nm. The in-plane phase difference value may be specifically, 5,000 nm or more, 6,000 nm or more, 7,000 nm or more, 8,000 nm or more, or 9,000 nm or more, and may be 50,000 nm or less, 40,000 nm or less, 30,000 nm or less, 20,000 nm or less, 18,000 nm or less, 16,000 nm or less, 15,000 nm or less, or 12,000 nm or less. Through this, it may be advantageous to provide a liquid crystal cell without optical defects such as a rainbow phenomenon.

In this specification, the in-plane phase difference is a physical quantity according to Equation A below.

[Equation A]

$$Rin = d \times (nx - ny)$$

In Equation A, Rin is the in-plane phase difference, nx is the refractive index of the film in the slow axis direction, ny is the refractive index of the film in the fast axis direction, and d is the thickness of the film. nx and ny mean refractive indices of the x axis and y axis of the film, respectively. The x-axis means a direction parallel to the in-plane slow axis of the film, the y-axis means a direction parallel to the in-plane fast axis of the film, where the x-axis and y-axis may be orthogonal to each other within the plane.

A specific kind of the film applicable to the base layer is not particularly limited if it exhibits an in-plane phase difference in the above-mentioned range. For example, an anisotropic polymer film to which optical anisotropy is imparted by stretching may be applied. The polymer film may be exemplified by, for example, a polyolefin film such as a polyethylene film or a polypropylene film, a cycloolefin polymer (COP) film such as a polynorbornene film, a polyvinyl chloride film, a polyacrylonitrile film, a polysulfone film, a polyacrylate film, a PVA (poly(vinyl alcohol)) film, a cellulose ester-based polymer film such as a TAC (triacetyl cellulose) film, a polyester film or a polycarbonate film, or a copolymer film of two or more monomers among monomers forming the polymer, and the like.

In one example, as the film, a polyester film such as a PET (poly(ethylene terephthalate)) film may be applied. That is, a film exhibiting an in-plane phase difference in the above-described range is known in the industry, and in the case of a polymer film, such a film exhibits asymmetry even in mechanical properties by stretching or the like in the manufacturing process as well as optically large anisotropy. A representative example of such a retardation film known in the industry is a stretched polyester film such as a stretched PET (poly(ethylene terephthalate)) film.

When the anisotropic film is simultaneously applied to the first and second base layers, the substrates may be disposed such that their slow axes are parallel or perpendicular to each other.

In one example, a polyester film such as a PET film may be applied as the film, but the type of film applicable as a substrate in the present application is not limited thereto.

In one example, the first base layer and the second base layer may each have a thickness of about 10 μm to about 1,000 μm. As another example, the base layers may each have a thickness of 20 μm or more, 40 μm or more, 60 μm or more, 80 μm or more, 100 μm or more, 120 μm or more, or 140 μm or more, and the thickness may be 900 μm or less, 800 μm or less, 700 μm or less, 600 μm or less, 500 μm or less, or about 400 μm or less. When the thicknesses of the first base layer and the second base layer satisfy the above range, it may be advantageous to reduce appearance defects such as wrinkles at the time of manufacturing an optical device by laminating the liquid crystal cell with outer substrates.

The pressure-sensitive adhesive layer may be present on the inner side surface of the first base layer. In this specification, the "inner side surface" of the constitution included in the liquid crystal cell may mean a surface facing the liquid crystal layer. Due to the use of such a pressure-sensitive adhesive layer, adhesion may be imparted between the upper and lower substrates so that separation of the liquid crystal cells does not occur during the bonding process for

supporting the liquid crystal composition between the upper and lower substrates or in the subsequent processes. In addition, the pressure-sensitive adhesive layer may be advantageous for roll-to-roll processability and preventing flow of the liquid crystal composition.

In this specification, the term "layer of the pressure-sensitive adhesive composition" may mean a layer formed by coating or curing the pressure-sensitive adhesive composition. The term "curing of the pressure-sensitive adhesive composition" may mean implementing a cross-linked structure in the pressure-sensitive adhesive composition through a physical or chemical action or reaction of components included in the pressure-sensitive adhesive composition. The curing can be induced by performing, for example, maintenance at room temperature, moisture application, heat application, active energy ray irradiation, or two or more processes of the foregoing together, and in each case, the pressure-sensitive adhesive composition in a type that the curing is induced may be referred to as, for example, a room temperature curing pressure-sensitive adhesive composition, a moisture-curing pressure-sensitive adhesive composition, a heat-curing pressure-sensitive adhesive composition, an active energy ray-curing pressure-sensitive adhesive composition or a hybrid curing pressure-sensitive adhesive composition.

The pressure-sensitive adhesive layer may be optically transparent. The pressure-sensitive adhesive layer may have average transmittance of about 80% or more, 85% or more, 90% or more, or 95% or more for the visible light region, for example, a wavelength of 380 nm to 780 nm.

The pressure-sensitive adhesive layer may be a liquid crystal orientational pressure-sensitive adhesive layer. The pressure-sensitive adhesive layer may be, for example, a vertically orientational pressure-sensitive adhesive layer or a horizontally orientational pressure-sensitive adhesive layer. In this specification, the "vertically orientational pressure-sensitive adhesive" may mean a pressure-sensitive adhesive having attachment force capable of bonding the upper substrate and the lower substrate while imparting vertical orientation force to the adjacent liquid crystal compound. In this specification, the "horizontally orientational pressure-sensitive adhesive" may mean a pressure-sensitive adhesive having attachment force capable of bonding the upper substrate and the lower substrate while imparting horizontal orientation force to the adjacent liquid crystal compound. The pretilt angle of the adjacent liquid crystal compound with respect to the vertically orientational pressure-sensitive adhesive may be in a range of 80 degrees to 90 degrees, 85 degrees to 90 degrees or about 87 degrees to 90 degrees, and the pretilt angle of the adjacent liquid crystal compound with respect to the horizontally orientational pressure-sensitive adhesive may be in a range of 0 degrees to 10 degrees, 0 degrees to 5 degrees or 0 degrees to 3 degrees. According to one example of the present application, the pressure-sensitive adhesive layer may be a vertically orientational pressure-sensitive adhesive layer.

In this specification, the pretilt angle may mean an angle formed by a director of a liquid crystal compound with respect to a plane horizontal to a liquid crystal orientational pressure-sensitive adhesive or an alignment film in a state where no voltage is applied. In this specification, the director of the liquid crystal compound may mean the optical axis or the slow axis of the liquid crystal layer. Alternatively, the director of the liquid crystal compound may mean a long axis direction when the liquid crystal compound has a rod shape, and may mean an axis parallel to the normal direction of the disk plane when the liquid crystal compound has a discotic shape.

When the pressure-sensitive adhesive layer is a vertical orientation pressure-sensitive adhesive layer, the pressure-sensitive adhesive layer may have a surface energy of 16 mN/m or less. The lower limit of the surface energy may be, for example, 5 mN/m or more. When the pressure-sensitive adhesive layer is a horizontal orientation pressure-sensitive adhesive layer, the surface energy may be greater than 16 mN/m. The upper limit of the surface energy may be, for example, 50 mN/m or less. The surface energy can be measured using a drop shape analyzer (KRUSS' DSA100 product). Specifically, a process that deionized water with a known surface tension is dropped on the surface of the pressure-sensitive adhesive to obtain the contact angle is repeated 5 times, thereby obtaining the average value of the resulting five contact angle values, and equally a process that diiodomethane with a known surface tension is dropped thereon to obtain the contact angle is repeated 5 times, thereby obtaining the average value of the resulting five contact angle values. Then, the surface energy may be obtained by substituting a numerical value (Strom value) for the surface tension of the solvent by the Owens-Wendt-Rabel-Kaelble method using the obtained average values of the contact angles for deionized water and diiodomethane. The surface energy ($\gamma$surface) of the sample can be calculated by considering the dispersion force between nonpolar molecules and the interaction force between polar molecules ($\gamma$surface = $\gamma$dispersion + $\gamma$polar), where the ratio of the polar term ($\gamma$polar) in the surface energy $\gamma$surface can be defined as polarity of the surface.

The thickness of the pressure-sensitive adhesive layer may be, for example, in a range of 3$\mu$m to 15$\mu$m. When the thickness of the pressure-sensitive adhesive layer is within the above range, it may be advantageous to minimize defects such as pressing or crowding of the pressure-sensitive adhesive when used in the manufacture of a liquid crystal cell, while securing attachment force between the upper substrate and the lower substrate.

As the pressure-sensitive adhesive layer, various types of pressure-sensitive adhesives known in the industry as a so-called OCA (optically clear adhesive) may be appropriately used. The pressure-sensitive adhesive may be different from an OCR (optically clear resin) type adhesive which is cured after the object to be attached is bonded in that it is cured before the object to be attached is bonded.

The pressure-sensitive adhesive layer may comprise a silicone pressure-sensitive adhesive. In the case of the silicone pressure-sensitive adhesive, the pressure-sensitive adhesive composition may comprise a curing silicone compound as a pressure-sensitive adhesive resin. The pressure-sensitive adhesive composition comprising a curing silicone compound as the pressure-sensitive adhesive resin may be referred to as a silicone composition. The silicone pressure-sensitive adhesive may comprise a cured product of a curing silicone compound as the pressure-sensitive adhesive resin. In the case of using the silicone pressure-sensitive adhesive, it may be suitable for showing vertical orientation force with respect to the liquid crystals due to the surface energy difference with the liquid crystals, and it may also be advantageous in terms of preventing contamination of the liquid crystals. The type of the curing silicone compound is not particularly limited, and for example, a heat-curing silicone compound or an ultraviolet-curing silicone compound may be used.

**In** one example, the curing silicone compound may be an addition-curing silicone compound.

Specifically, the addition-curing silicone compound may be exemplified by (1) an organopolysiloxane containing two or more alkenyl groups in the molecule and (2) an organopolysiloxane containing two or more silicon-bonded hydrogen atoms in the molecule, but is not limited thereto.

Such a silicone compound can form a cured product by an addition reaction, for example, in the presence of a catalyst such as platinum.

The (1) organopolysiloxane comprises, as a main component constituting the silicone cured product, at least two alkenyl groups in one molecule. At this time, a specific example of the alkenyl group includes a vinyl group, an allyl group, a butenyl group, a pentenyl group, a hexenyl group or a heptenyl group, and the like, and a vinyl group of the foregoing is usually applied, but is not limited thereto. In the (1) organopolysiloxane, the bonding position of the alkenyl group as described above is not particularly limited. For example, the alkenyl group may be bonded to the end of the molecular chain and/or to the side chain of the molecular chain. In addition, in the (1) organopolysiloxane, the type of the substituent that may be included in addition to the above-described alkenyl may include an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group or a 3,3,3-trifluoropropyl group, and the like, and a methyl group or a phenyl group of the foregoing is usually applied, but is not limited thereto.

The molecular structure of the (1) organopolysiloxane is not particularly limited, which may also have any shape, such as linear, branched, cyclic, reticulated or linear with partially branched. One having a linear molecular structure among such molecular structures is usually applied, but is not limited thereto.

A more specific example of the (1) organopolysiloxane may include a dimethylsiloxane-methylvinylsiloxane copolymer blocking with trimethylsiloxane groups at both ends of the molecular chain, a methylvinylpolysiloxane blocking with trimethylsiloxane groups at both ends of the molecular chain, a dimethylsiloxane-methylvinylsiloxane-methylphenylsiloxane copolymer blocking with trimethylsiloxane groups at both ends of the molecular chain, a dimethylpolysiloxane blocking with dimethylvinylsiloxane groups at both ends of the molecular chain, a methyl vinylpolysiloxane blocking with dimethylvinylsiloxane groups at both ends of the molecular chain, a dimethylsiloxane-methylvinylsiloxane copolymer blocking with dimethylvinylsiloxane groups at both ends of the molecular chain, a dimethylsiloxane-methylvinylsiloxane-methylphenylsiloxane copolymer blocking with dimethylvinylsiloxane groups at both ends of the molecular chain, an organopolysiloxane copolymer comprising a siloxane unit represented by $R^1_2SiO_{2/2}$ and a siloxane unit represented by $R^1_2R^2SiO_{1/2}$ and a siloxane unit represented by $SiO_{4/2}$, an organopolysiloxane copolymer comprising a siloxane unit represented by $R^1_2R^2SiO_{1/2}$ and a siloxane unit represented by $SiO_{4/2}$, an organopolysiloxane copolymer comprising a siloxane unit represented by $R^1R^2SiO_{2/2}$ and a siloxane unit represented by $R^1SiO_{3/2}$ or a siloxane unit represented by $R^2SiO_{3/2}$, and a mixture of two or more of the foregoing, but is not limited thereto. Here, $R^1$ is a hydrocarbon group other than an alkenyl group, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenentyl group; a halogen-substituted alkyl group such as a chloromethyl group, a 3-chloropropyl group, or a 3,3,3-trifluoropropyl group, and the like. In addition, here, $R^2$ is an alkenyl group, which may be, specifically, a vinyl group, an allyl group, a butenyl group, a pentenyl group, a hexenyl group or a heptenyl group, and the like.

In the addition-curing silicone composition, the (2) organopolysiloxane may serve to crosslink the (1) organopolysiloxane. In the (2) organopolysiloxane, the bonding position of the hydrogen atom is not particularly limited, which may be, for example, bonded to the end and/or side chain of the molecular chain. Also, in the (2) organopolysiloxane, the kind of substituents that may be included in addition to the silicon-bonded hydrogen atom is not particularly limited, which may include, for example, an alkyl group, an aryl group, an aralkyl group or a halogen-substituted alkyl group, and the like as mentioned in the (1) organopolysiloxane, and among these, a methyl group or a phenyl group is usually applied, but is not limited thereto.

The molecular structure of the (2) organopolysiloxane is not particularly limited, and may also have any shape, such as linear, branched, cyclic, reticulated, or linear with partially branched. One having a linear molecular structure

among such molecular structures is usually applied, but is not limited thereto.

A more specific example of the (2) organopolysiloxane may include a methylhydrogenpolysiloxane blocking with trimethylsiloxane groups at both ends of the molecular chain, a dimethylsiloxane-methylhydrogen copolymer blocking with trimethylsiloxane groups at both ends of the molecular chain, a dimethylsiloxane-methylhydrogensiloxane-methylphenylsiloxane copolymer blocking with trimethylsiloxane groups at both ends of the molecular chain, a dimethylpolysiloxane blocking with dimethylhydrogensiloxane groups at both ends of the molecular chain, a dimethylsiloxane-methylphenylsiloxane copolymer blocking with dimethylhydrogensiloxane groups at both ends of the molecular chain, a methylphenylpolysiloxane blocking with dimethylhydrogensiloxane groups at both ends of the molecular chain, an organopolysiloxane copolymer comprising a siloxane unit represented by $R^1{}_3SiO_{1/2}$, a siloxane unit represented by $R^1{}_2HSiO_{1/2}$ and a siloxane unit represented by $SiO_{4/2}$, an organopolysiloxane copolymer comprising a siloxane unit represented by $R^1{}_2HSiO_{1/2}$ and a siloxane unit represented by $SiO_{4/2}$, an organopolysiloxane copolymer comprising a siloxane unit represented by $R^1HSiO_{2/2}$ and a siloxane unit represented by $R^1SiO_{3/2}$ or a siloxane unit represented by $HSiO_{3/2}$ and a mixture of two or more of the foregoing, but is not limited thereto. Here, $R^1$ is a hydrocarbon group other than an alkenyl group, which may be, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenentyl group; a halogen-substituted alkyl group such as a chloromethyl group, a 3-chloropropyl group or a 3,3,3-trifluoropropyl group, and the like.

The content of the (2) organopolysiloxane is not particularly limited as long as it is included to the extent that appropriate curing can be performed. For example, the (2) organopolysiloxane may be contained in an amount of 0.5 to 10 silicon-bonded hydrogen atoms per one alkenyl group contained in the (1) organopolysiloxane as described above. In such a range, curing can be sufficiently performed and heat resistance can be secured.

The addition-curing silicone composition may also comprise an appropriate additive required from the viewpoint of improving storage stability, handling properties and workability in an appropriate ratio.

In another example, the silicone composition may comprise, as a condensation-curing silicone composition, for example, (a) an alkoxy group-containing siloxane polymer; and (b) a hydroxyl group-containing siloxane polymer.

The (a) siloxane polymer may be, for example, a compound represented by Formula I below.

[Formula I] $$R^1{}_aR^2{}_bSiO_c(OR^3)_d$$

In Formula I, $R^1$ and $R^2$ each independently represent a hydrogen atom or a substituted or unsubstituted monovalent hydrocarbon group, $R^3$ represents an alkyl group, where when a plurality of $R^1$, $R^2$ and $R^3$ are present, they each may be the same or different from each other, and a and b each independently represent a number of 0 or more and less than 1, a+b represents a number of more than 0 and less than 2, c represents a number of more than 0 and less than 2, d represents a number of more than 0 and less than 4, and $a+b+c\times2+d$ is 4.

In the definition of Formula I, the monovalent hydrocarbon group may be, for example, an alkyl group having 1 to 8 carbon atoms, a phenyl group, a benzyl group or a tolyl group, and the like, where the alkyl group having 1 to 8 carbon atoms may be a methyl group, an ethyl group, a propyl group, an isopropyl group, a butyl group, a pentyl group, a hexyl group, a heptyl group or an octyl group, and the like. Also, in the definition of Formula 1, the monovalent hydrocarbon group may be substituted with a known substituent such as a halogen, an amino group, a mercapto group, an isocyanate group, a glycidyl group, a glycidoxy group or a ureido group.

In the definition of Formula I, an example of the alkyl group of $R^3$ may include a methyl group, an ethyl group, a propyl group, an isopropyl group or a butyl group, and the like. Among these alkyl groups, a methyl group or an ethyl group, and the like is usually applied, but is not limited thereto.

Among the polymers of Formula I, a branched or tertiary crosslinked siloxane polymer may be used. Furthermore, in this (a) siloxane polymer, a hydroxyl group may remain within a range that does not impair the object of the present application, specifically within a range that does not inhibit the dealcoholization reaction.

The (a) siloxane polymer may be produced, for example, by hydrolyzing and condensing a polyfunctional alkoxysilane or a polyfunctional chlorosilane, and the like. An average technician in this field can easily select an appropriate polyfunctional alkoxysilane or chlorosilane depending on the desired (a) siloxane polymer, and can also easily control the conditions of the hydrolysis and condensation reactions using the same. Meanwhile, in the production of the (a) siloxane polymer, an appropriate monofunctional alkoxy silane may also be used in combination depending on the purpose.

As the (a) siloxane polymer, for example, a commercially available organosiloxane polymer such as Shin-Etsu Silicone's X40-9220 or X40-9225, or GE Toray Silicone's XR31-B1410, XR31-B0270 or XR31-B2733 may be used.

As the (b) hydroxyl group-containing siloxane polymer contained in the condensation-curing silicone composition, for example, a compound represented by the following formula II may be used.

[Formula II]

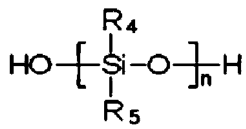

In Formula II, $R^4$ and $R^5$ each independently represent a hydrogen atom or a substituted or unsubstituted monovalent hydrocarbon group, where when a plurality of $R^4$ and $R^5$ are present, they may be the same or different from each other, and n represents an integer of 5 to 2,000.

In the definition of Formula II, the specific type of the monovalent hydrocarbon group may include, for example, the same hydrocarbon group as the case of Formula 1 above.

The (b) siloxane polymer may be produced, for example, by hydrolyzing and condensing dialkoxysilane and/or dichlorosilane, and the like. An average technician in this field can easily select an appropriate dialkoxysilane or dichlorosilane according to the desired (b) siloxane polymer, and can also easily control the conditions of the hydrolysis and condensation reactions using the same. As the (b) siloxane polymer as above, a commercially available bifunctional organosiloxane polymer, such as GE Toray Silicone's XC96-723, YF-3800 or YF-3804, and the like may be used.

According to the present application, by controlling the storage elastic modulus and tangent delta value of the pressure-sensitive adhesive layer at a temperature of 110°C, it is possible to prevent pressing black spots after the high-temperature and high-pressure autoclave. In this specification, the tangent delta (tan$\delta$) value is G"/G' (G' is the storage elastic modulus, and G" is the loss elastic modulus). The storage elastic modulus (G') may mean the elasticity of the pressure-sensitive adhesive, and the loss elastic modulus (G" ) may mean the viscosity of the pressure-sensitive adhesive. As the storage elastic modulus increases, it can be said that the pressure-sensitive adhesive is hard and has high elasticity, and as the loss elastic modulus increases, it can be said that the pressure-sensitive adhesive is soft and has a high viscosity. Since the pressure-sensitive adhesive has elasticity and viscosity simultaneously, they can be expressed as a loss coefficient, tan $\delta$ value, which is the ratio of the loss elastic modulus to the storage elastic modulus, where if the tan $\delta$ value is less than 1, it can be said that it has high elasticity characteristics, and if the tan $\delta$ value is more than 1, it can be said that it has high viscosity characteristics.

According to the present invention, the storage elastic modulus of the pressure-sensitive adhesive layer at a temperature of 110°C and a frequency of 1 rad/sec is 18,000 Pa or more. The storage elastic modulus of the pressure-sensitive adhesive layer at a temperature of 110°C and a frequency of 1 rad/sec may be 100,000 Pa or less. The storage elastic modulus of the pressure-sensitive adhesive layer may be, specifically, 19,000 Pa or more, 19,500 Pa or more, 20,000 Pa or more, 20,500 Pa or more, 21,000 Pa or more, 21,500 Pa or more, 22,000 Pa or more, 22,500 Pa or more, 23,000 Pa or more, 23,500 Pa or more, 24,000 Pa or more, 24,500 Pa or more, 25,000 Pa or more, 30,000 Pa or more, 35,000 Pa or more, 40,000 Pa or more, 45,000 Pa or more, or 50,000 Pa or more, and may be 90,000 Pa or less, 85,000 Pa or less, 80,000 Pa or less, 75,000 Pa or less, 70,000 Pa or less, 65,500 Pa or less, 60,000 Pa or less, 55,000 Pa or less, 50,000 Pa or less, 45,500 Pa or less, 40,000 Pa or less, 35,500 Pa or less, 30,000 Pa or less 25,000 Pa or less, 25,500 Pa or less, 24,000 Pa or less, 23,500 Pa or less, 23,000 Pa or less, 22,000 Pa or less, 21,000 Pa or less, or 20,000 Pa or less. When the storage elastic modulus of the pressure-sensitive adhesive layer at a temperature of 110°C and a frequency of 1 rad/sec is within the above range, it is possible to prevent pressing black spots after the high-temperature and high-pressure autoclave.

In one example, the pressure-sensitive adhesive layer may have a storage elastic modulus of 10,000 Pa or more at a temperature of 25°C and a frequency of 1 rad/sec. The pressure-sensitive adhesive layer may have a storage elastic modulus of 1,100,000 or less at a temperature of 25°C and a frequency of 1 rad/sec. The storage elastic modulus of the pressure-sensitive adhesive layer may be specifically, 30,000 Pa or more, 35,000 Pa or more, 50,000 Pa or more, 100,000 Pa or more, 150,000 Pa or more, 200,000 Pa or more, 250,000 Pa or more, 300,000 Pa or more, 350,000 Pa or more, 400,000 Pa or more, 500,000 Pa or more, 600,000 Pa or more, 700,000 Pa or more, 800,000 Pa or more, 900,000 Pa or more, or 1,000,000 Pa or more, and may be 900,000 Pa or less, 800,000 Pa or less, 700,000 Pa or less, 600,000 Pa or less, 500,000 Pa or less, 450,000 Pa or less 400,000 Pa or less, 350,000 Pa or less, 300,000 Pa or less, 250,000 Pa or less, 200,000 Pa or less, 150,000 Pa or less, 100,000 Pa or less, or 50,000 Pa or less. When the storage elastic modulus of the pressure-sensitive adhesive layer at a temperature of 25°C and a frequency of 1 rad/sec is within the above range, defects such as pressing or pushing of the pressure-sensitive adhesive during manufacture of the liquid crystal cell are minimized while the adhesion between the upper and lower substrates is secured, whereby it may be advantageous to secure excellent electro-optical characteristics and appearance uniformity.

According to the present invention, the tangent delta value of the pressure-sensitive adhesive layer at a temperature of 110°C and a frequency of 1 rad/sec is 0.32 or less. The tangent delta value of the pressure-sensitive adhesive layer at a temperature of 110°C and a frequency of 1 rad/sec may be 0.1 or more. The tangent delta value of the

pressure-sensitive adhesive layer may be, specifically, 0.31 or less, 0.30 or less, 0.29 or less, 0.28 or less, 0.27 or less, 0.26 or less, 0.25 or less, 0.24 or less, 0.23 or less, or 0.22 or less, and may be 0.12 or more, 0.14 or more, 0.16 or more, 0.18 or more, 0.20 or more, 0.22 or more, 0.24 or more, 0.26 or more, 0.28 or more, or 0.30 or more. When the tangent delta value of the pressure-sensitive adhesive layer at a temperature of 110°C and a frequency of 1 rad/sec is within the above range, it is possible to prevent pressing black spots after the high-temperature and high-pressure autoclave.

In one example, the pressure-sensitive adhesive layer may have a tangent delta value of 2.0 or less at a temperature of 25°C and a frequency of 1 rad/sec. The pressure-sensitive adhesive layer may have a tangent delta value of 0.1 or more at a temperature of 25°C and a frequency of 1 rad/sec. The tangent delta value of the pressure-sensitive adhesive layer may be, specifically, 0.1 or more, 0.2 or more, 0.3 or more, 0.4 or more, 0.5 or more, 0.6 or more, 0.7 or more, 0.8 or more, 0.9 or more, 1.0 or more, 1.1 or more, 1.2 or more, 1.3 or more, 1.4 or more, or 1.5 or more, and may be 2.0 or less, 1.9 or less, 1.8 or less, 1.7 or less, 1.6 or less, 1.5 or less, 1.4 or less, 1.3 or less, 1.2 or less, 1.1 or less, 1.0 or less, 0.9 or less, 0.8 or less, 0.7 or less, 0.6 or less, 0.5 or less, or 0.45 or less. When the tangent delta value of the pressure-sensitive adhesive layer at a temperature of 25°C and a frequency of 1 rad/sec is within the above range, defects such as pressing or pushing of the pressure-sensitive adhesive during manufacture of the liquid crystal cell are minimized while the adhesion between the upper and lower substrates is secured, whereby it may be advantageous to secure excellent electro-optical characteristics and appearance uniformity.

A method of controlling the storage elastic modulus and tangent delta value of the pressure-sensitive adhesive layer is known, and in the present application, the method of controlling the storage elastic modulus and tangent delta value is not particularly limited. In one example, the storage elastic modulus and tangent delta value of the pressure-sensitive adhesive layer may be controlled by appropriately adjusting the catalyst or crosslinking agent of the pressure-sensitive adhesive and/or the pressure-sensitive adhesive composition, and appropriately adjusting the curing conditions of the pressure-sensitive adhesive. The following contents are only exemplary conditions for providing the pressure-sensitive adhesive of the present application, but the scope of the present application is not limited thereto.

In one example, the pressure-sensitive adhesive and/or the pressure-sensitive adhesive composition may further comprise a catalyst for curing. As the catalyst, for example, a platinum-based catalyst may be used. The content of the catalyst may be adjusted in consideration of desired physical properties of the pressure-sensitive adhesive layer. The catalyst may be included in an amount of 0.1 parts by weight or more, 0.5 parts by weight or more, or 1 part by weight or more, and may be included in an amount of 1.5 parts by weight or less, 1.3 parts by weight or less, or 1.1 parts by weight or less, relative to 100 parts by weight of the pressure-sensitive adhesive resin.

According to examples of the present application, in the case where other conditions rather than the content of the catalyst are the same, the storage elastic modulus tends to decrease, and the tangent delta value also tends to decrease, as the content of the catalyst increases.

In one example, the pressure-sensitive adhesive and/or the pressure-sensitive adhesive composition may further comprise a crosslinking agent. As the crosslinking agent, for example, a silane compound may be used. The silane compound may be, for example, a compound represented by Formula 1 or Formula 2. The crosslinking agent may be included in an amount of 1 part by weight or more, 2 parts by weight or more, 3 parts by weight or more, 4 parts by weight or more, 5 parts by weight or more, 7 parts by weight or more, 10 parts by weight or more, 12 parts by weight or more, or 15 parts by weight or more, and may be included in an amount of 20 parts by weight or less, 19 parts by weight or less, 18 parts by weight or less, 17 parts by weight or less, 16 parts by weight or less, 15 parts by weight or less, 13 parts by weight or less, 11 parts by weight or less, 9 parts by weight or less, 7 parts by weight or less, 5 parts by weight or less, or 3 parts by weight or less, relative to 100 parts by weight of the pressure-sensitive adhesive resin.

[Formula 1]

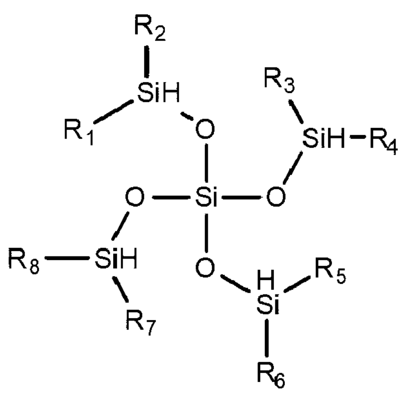

In Formula 1, $R_1$ to $R_8$ may each independently be an alkyl group with 1 to 4 carbon atoms. Specifically, in Formula 1, $R_1$ to $R_8$ may each independently be an alkyl group with 1 to 3 carbon atoms, or an alkyl group with 1 to 2 carbon atoms. According to one example of the present application, $R_1$ to $R_8$ may each be a methyl group.

[Formula 2]

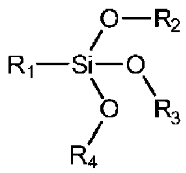

In Formula 2, $R_1$ is an alkyl group with 10 to 30 carbon atoms, and $R_2$ to $R_4$ are each independently an alkyl group with 1 to 4 carbon atoms. In Formula 2, $R_1$ may be an alkyl group with 10 or more, 12 or more, 14 or more, 16 or more, or 18 or more carbon atoms. In Formula 2, $R_1$ may be an alkyl group with 30 or less, 28 or less, 26 or less, 24 or less, 22 or less, 20 or less, or 18 or less carbon atoms. The alkyl group may be a linear alkyl group. In Formula 2, $R_2$ to $R_4$ may each independently be an alkyl group with 1 to 4 carbon atoms, an alkyl group with 1 to 3 carbon atoms, or an alkyl group with 1 to 2 carbon atoms. According to one example of the present application, $R_2$ to $R_4$ may each be a methyl group.

In one example, the curing temperature for providing the pressure-sensitive adhesive layer may be in a range of, for example, about 140°C to 180°C. The curing time for providing the pressure-sensitive adhesive layer may be, for example, 3 minutes to 15 minutes. Specifically, a pressure-sensitive adhesive layer may be provided by coating a pressure-sensitive adhesive composition on a release film and then curing it under the above conditions. According to examples of the present application, in the case where other conditions rather than the curing time are the same, the storage elastic modulus tends to increase, and the tangent delta value tends to decrease, as the curing time increases. According to examples of the present application, in the case where other conditions rather than the curing temperature are the same, the storage elastic modulus tends to increase, and the tangent delta value tends to decrease, as the curing temperature increases.

The upper substrate and the lower substrate of the liquid crystal cell may be attached by the pressure-sensitive adhesive layer. Specifically, the pressure-sensitive adhesive layer of the upper substrate and the spacer of the lower substrate may be attached. When the alignment film is formed on the spacer of the lower substrate, the region corresponding to the spacer of the alignment film may be attached to the pressure-sensitive adhesive layer of the upper substrate.

The liquid crystal compound can switch its orientation state by application of a voltage. As the liquid crystal compound, a liquid crystal compound capable of changing the alignment direction by application of an external action may be used. In this specification, the term "external action" may mean all external factors that may affect the behavior of materials included in the liquid crystal layer, for example, an external voltage, or the like. Therefore, the state without any external action may mean a state without application of an external voltage, or the like.

The type and physical properties of the liquid crystal compound may be appropriately selected in consideration of the purpose of the present application. In one example, the liquid crystal compound may be a nematic liquid crystal or a smectic liquid crystal. The nematic liquid crystal may mean a liquid crystal that rod-shaped liquid crystal molecules are arranged in parallel in the long-axis direction of the liquid crystal molecules although there is no regularity in their positions. The smectic liquid crystal may mean a liquid crystal that rod-shaped liquid crystal molecules are regularly arranged to form a layered structure and are arranged in parallel with regularity in the long axis direction. According to one example of the present application, the liquid crystal compound may be a nematic liquid crystal compound.

As the nematic liquid crystal compound, one having a clearing point of, for example, about 40°C or more, 50°C or more, 60°C or more, 70°C or more, 80°C or more, 90°C or more, 100°C or more, or about 110°C or more, or having a phase transition point in the above range, that is, a phase transition point to an isotropic phase on a nematic phase, can be selected. In one example, the clearing point or phase transition point may be about 160°C or less, 150°C or less, or about 140°C or less.

The liquid crystal compound may be a non-reactive liquid crystal compound. The non-reactive liquid crystal compound may mean a liquid crystal compound having no polymerizable group. The polymerizable group may be exemplified by an acryloyl group, an acryloyloxy group, a methacryloyl group, a methacryloyloxy group, a carboxyl group, a hydroxy group, a vinyl group or an epoxy group, and the like, but is not limited thereto, and a functional group known as the polymerizable group may be included.

The liquid crystal compound may have dielectric constant anisotropy of a positive number or a negative number. The absolute value of the dielectric constant anisotropy of the liquid crystal compound may be appropriately selected in consideration of the purpose of the present application. The term "dielectric constant anisotropy ($\Delta\varepsilon$)" may mean a

difference ($\varepsilon$// - $\varepsilon\perp$) between the horizontal dielectric constant ($\varepsilon$//) and the vertical dielectric constant ($\varepsilon\perp$) of the liquid crystal. In this specification, the term horizontal dielectric constant ($\varepsilon$//) means a dielectric constant value measured along the direction of an electric field in a state where a voltage is applied so that the director of the liquid crystal and the direction of the electric field by the applied voltage are substantially horizontal, and the vertical dielectric constant ($\varepsilon\perp$) means a dielectric constant value measured along the direction of an electric field in a state where a voltage is applied so that the director of the liquid crystal and the direction of the electric field by the applied voltage are substantially perpendicular. The dielectric constant anisotropy of the liquid crystal molecules may be in a range of 5 to 25.

The refractive index anisotropy ($\Delta$n) of the liquid crystal compound may be appropriately selected in consideration of the purpose of the present application. In this specification, the term "refractive index anisotropy" may mean a difference ($n_e$-$n_o$) between an extraordinary refractive index ($n_e$) and an ordinary refractive index ($n_o$) of a liquid crystal compound. The refractive index anisotropy of the liquid crystal compound may be, for example, 0.01 to 0.3. The refractive index anisotropy may be 0.01 or more, 0.05 or more, or 0.07 or more, and may be 0.3 or less, 0.2 or less, 0.15 or less, or 0.13 or less.

The liquid crystal layer may further comprise a dichroic dye. The dichroic dye may control light transmittance variable properties of the liquid crystal layer. In this specification, the term "dye" may mean a material capable of intensively absorbing and/or deforming light in at least a part of or all the ranges within a visible light region, for example, within a wavelength range of 400 nm to 700 nm, and the term "dichroic dye" may mean a material capable of anisotropic absorption of light in at least a part of or all the ranges of the visible light region.

The liquid crystal layer comprising the liquid crystal compound and the dichroic dye may be a GHLC layer (guest host liquid crystal layer). In this specification, the "GHLC layer (guest host liquid crystal layer)" may mean a functional layer that dichroic dyes are arranged together depending on arrangement of the liquid crystal compound to exhibit anisotropic light absorption characteristics with respect to an alignment direction of the dichroic dyes and the direction perpendicular to the alignment direction, respectively. For example, the dichroic dye is a substance whose absorption rate of light varies with a polarization direction, where if the absorption rate of light polarized in the long axis direction is large, it may be referred to as a p-type dye, and if the absorption rate of polarized light in the short axis direction is large, it may be referred to as an n-type dye. In one example, when a p-type dye is used, the polarized light vibrating in the long axis direction of the dye may be absorbed and the polarized light vibrating in the short axis direction of the dye may be less absorbed to be transmitted. Hereinafter, unless otherwise specified, the dichroic dye is assumed to be a p-type dye.

As the dichroic dye, for example, a known dye known to have a property capable of being aligned according to the orientation state of the liquid crystal compound by a so-called guest host effect may be selected and used. An example of such a dichroic dye includes azo dyes, anthraquinone dyes, methine dyes, azomethine dyes, merocyanine dyes, naphthoquinone dyes, tetrazine dyes, phenylene dyes, quarterrylene dyes, benzothiadiazole dyes, diketopyrrolopyrrole dyes, squaraine dyes or pyromethene dyes, and the like, but the dyes applicable in the present application are not limited thereto.

As the dichroic dye, a dye having a dichroic ratio, that is, a value obtained by dividing the absorption of the polarized light parallel to the long axis direction of the dichroic dye by the absorption of the polarized light parallel to the direction perpendicular to the long axis direction, of 5 or more, 6 or more, or 7 or more, can be used. The dye may satisfy the dichroic ratio in at least a part of the wavelengths or any one wavelength within the wavelength range of the visible light region, for example, within the wavelength range of about 380 nm to 700 nm or about 400 nm to 700 nm. The upper limit of the dichroic ratio may be, for example, 20 or less, 18 or less, 16 or less, or 14 or less or so.

The content of the dichroic dye in the liquid crystal layer may be appropriately selected in consideration of the purpose of the present application. For example, the content of the dichroic dye in the liquid crystal layer may be 0.2 wt% or more. The content of the dichroic dye may specifically be 0.5 wt% or more, 1 wt% or more, 2 wt% or more, or 3 wt% or more. The upper limit of the content of the dichroic dye may be, for example, 10 wt% or less, 9 wt% or less, 8 wt% or less, 6 wt% or less, or 5 wt% or less. When the content of the dichroic dye in the liquid crystal layer is too small, it may be difficult to express the desired transmittance variable characteristics, and when the content of the dichroic dye in the liquid crystal layer is too large, there is a risk of precipitation. Therefore, it may be advantageous that the content of the dichroic dye is within the above range.

The thickness of the liquid crystal layer is not particularly limited, and for example, the thickness of the liquid crystal layer may be about 0.01μm or more, 0.05μm or more, 0.1μm or more, 0.5μm or more, 1μm or more, 1.5μm or more, 2μm or more, 2.5μm or more, 3μm or more, 3.5μm or more, 4μm or more, 4.5μm or more, 5μm or more, 5.5μm or more, 6μm or more, 6.5μm or more, 7μm or more, 7.5μm or more, 8μm or more, 8.5μm or more, 9μm or more, or 9.5μm or more. The upper limit of the thickness of the liquid crystal layer is not particularly limited, which may generally be about 30μm or less, 25μm or less, 20μm or less, or 15μm or less.

The liquid crystal cell may switch the orientational state of the liquid crystal layer according to an applied voltage. In one example, in a state where no voltage is applied to the liquid crystal cell, the liquid crystal layer may have a first orientational state, and in a state where a voltage is applied to the liquid crystal cell, the liquid crystal layer may have a second orientational state different from the first orientational state. The first orientational state and/or the second

orientational state may be exemplified by a horizontal orientational state, a vertical orientational state, a twist orientational state, an inclined orientational state, a hybrid orientational state, and the like.

In this specification, the "horizontal orientational state" is a state where the director of the liquid crystal compound in the liquid crystal layer is arranged substantially parallel to the plane of the liquid crystal layer, where for example, the angle formed by the director with respect to the plane of the liquid crystal layer may be, for example, in the range of about -10 degrees to 10 degrees or -5 degrees to 5 degrees, or may form approximately about 0 degrees.

In this specification, the "vertical orientational state" is a state where the director of the liquid crystal compound in the liquid crystal layer is arranged substantially perpendicular to the plane of the liquid crystal layer, where for example, the angle formed by the director with respect to the plane of the liquid crystal layer may be, for example, in the range of about 80 degrees to 100 degrees or 85 degrees to 95 degrees, or may form approximately about 90 degrees.

In this specification, the "twisted orientational state" may mean a spiral structure in which the directors of the liquid crystal compounds in the liquid crystal layer are twisted along an imaginary spiral axis to form a layer and oriented. The twist orientational state may be implemented in a vertical, horizontal or oblique orientational state, and that is, the vertical twist orientational mode is a state where individual liquid crystal compounds are twisted along a spiral axis in a vertically oriented state to form a layer; the horizontal twist orientational mode is a state where individual liquid crystal compounds are twisted along a spiral axis in a horizontally oriented state to form a layer; and the oblique twist orientational mode is a state where individual liquid crystal compounds are twisted along a spiral axis in an obliquely oriented state to form a layer.

**In** this specification, the "hybrid orientational state" may mean an orientational state in which a tilt angle, which is an angle formed by a director of a liquid crystal compound in the liquid crystal layer with respect to the plane of the liquid crystal layer, gradually increases or decreases along the thickness direction of the liquid crystal layer.

**In** one example, the first orientation state may be a twist orientation state. That is, the liquid crystal layer may switch between twist orientation and an orientation state different from the twist orientation through the application of external energy.

**In** one example, the liquid crystal layer may switch between twist orientation and vertical orientation states. **In** one example, the liquid crystal layer may be in the vertical orientation state in a state where no voltage is applied, and may be in the twist orientation state in a state where a voltage is applied. The twist orientation may be horizontal twist orientation.

The liquid crystal layer may further comprise a chiral dopant. When the liquid crystal layer comprises a chiral agent, the twist orientation state may be implemented. The chiral agent (or chiral dopant) that can be included in the liquid crystal layer can be used without particular limitation as long as it can induce a desired rotation (twisting) without deteriorating the liquid crystallinity, for example, the nematic regularity. The chiral agent for inducing rotation in the liquid crystal compound needs to include at least chirality in the molecular structure. The chiral agent may be exemplified by, for example, a compound having one or two or more asymmetric carbons, a compound having an asymmetric point on a heteroatom, such as a chiral amine or a chiral sulfoxide, or a compound having axially asymmetric and optically active sites such as cumulene or binaphthol. The chiral agent may be, for example, a low molecular weight compound having a molecular weight of 1,500 or less. As the chiral agent, commercially available chiral nematic liquid crystals, for example, chiral dopant liquid crystal S811 commercially available from Merck Co., Ltd., or BASF's LC756 may also be used.

The application rate of the chiral dopant may be selected so that the desired pitch (P) may be achieved. In general, the content (wt%) of the chiral dopant may be calculated by an equation of 100/(HTP x P). The HTP represents the helical twisting power of the chiral dopant, where the unit may be $\mu m^{-1}$. The P may be the pitch of the liquid crystal in the twist orientation state, where the unit may be μm. The pitch (P) of the liquid crystal layer can be measured by a measurement method using a wedge cell, and specifically, can be measured by a method described in D. Podolskyy et al. Simple method for accurate measurements of the cholesteric pitch using a "stripe-wedge" Grandjean-Cano cell (Liquid Crystals, Vol. 35, No. 7, July 2008, 789-791). The HTP value can be measured by the measurement method using the above-described wedge cell. Alternatively, the HTP value can be generally provided from a supplier of liquid crystals and chiral dopants. The content of the chiral dopant may be determined in consideration of the desired pitch with reference to the above method.

In one example, the pitch (unit: μm) of the liquid crystal in the twist orientation state may be within a range of 15μm to 50μm. The pitch may be, specifically, 16μm or more, 17μm or more, 18μm or more, 19μm or more, or 20μm or more, and may be 50μm or less, 45μm or less, 40μm or less, 35μm or less, or 30μm or less.

The upper substrate of the liquid crystal cell further comprises a first electrode layer (10b) between the first base layer (10a) and the pressure-sensitive adhesive layer (10c). The first electrode layer (10b) may contact the inner side surface of the first base layer (10a). The pressure-sensitive adhesive layer (10c) may contact the inner side surface of the first electrode layer (10b). The lower substrate of the liquid crystal cell further comprises a second electrode layer (20b) between the second base layer (20a) and the spacers (20c). The second electrode layer (20b) may contact the inner side surface of the second base layer (20a). The spacers (20c) may contact the inner side surface of the second electrode layer (20b).

The first electrode layer and the second electrode layer may serve to provide application of an external action, for example, an electric field, so that the material included in the liquid crystal layer transmits or blocks incident light. In one

example, the first electrode layer and/or the second electrode layer may comprise a conductive polymer, a conductive metal, a conductive nanowire, or a metal oxide such as ITO (indium tin oxide), and the like, but is not limited thereto. The first electrode layer and/or second electrode layer may be formed by, for example, depositing the conductive polymer, the conductive metal, the conductive nanowire, or the metal oxide such as ITO (indium tin oxide).

The lower substrate of the liquid crystal cell may further comprise an alignment film (20d). The alignment film (20d) may be present on the spacers (20c). That is, the top surface part and/or the side surface part of the spacers (20c) may contact the alignment film. A lower surface part of the spacers (20c) may contact the second electrode layer (20b). Since the pressure-sensitive adhesive layer included in the upper substrate may have liquid crystal orientation, the upper substrate may not comprise an alignment film. That is, the alignment film may not be included on the inner side surface of the first electrode layer (10b) and/or the pressure-sensitive adhesive layer (10c).

In this specification, the combination of the first base layer, the first electrode layer and the pressure-sensitive adhesive layer may be referred to as the upper substrate, and the combination of the second base layer, the second electrode layer, the spacer and the alignment film may be referred to as the lower substrate. In the liquid crystal cell, the upper substrate may not comprise a separate alignment film other than the pressure-sensitive adhesive layer, and the lower substrate may comprise the alignment film.

The alignment film and the liquid crystal layer may be in contact with each other. The alignment film may be a vertical alignment film or a horizontal alignment film. In this specification, the "horizontal alignment film" may mean a layer comprising an orientational material that imparts horizontal orientation force to a liquid crystal compound present in an adjacent liquid crystal layer. In this specification, the "vertical alignment film" may mean a layer comprising an orientational material that imparts vertical orientation force to a liquid crystal compound present in an adjacent liquid crystal layer. The adjacent liquid crystal compound may have a pretilt angle with respect to the vertical alignment film in the range of 80 degrees to 90 degrees, 85 degrees to 90 degrees, or about 87 degrees to 90 degrees, and the adjacent liquid crystal compound may have a pretilt angle with respect to the horizontal alignment film in the range of 0 degrees to 10 degrees, 0 degrees to 5 degrees or 0 degrees to 3 degrees. Unlike the pressure-sensitive adhesive layer, the alignment film may not have adhesive force for bonding the upper substrate and the lower substrate. In one example, the alignment film may have peel force close to zero with regard to the first base layer in the state of the liquid crystal cell of Figure 1.

The alignment film may be a rubbing alignment film or a photo-alignment film. The orientation direction of the alignment film may be a rubbing direction in the case of a rubbing alignment film and a direction of polarized light to be irradiated in the case of a photo-alignment film, where such an orientation direction can be confirmed by a detection method using an absorption-type linear polarizer. Specifically, the orientation direction can be confirmed by disposing an absorption-type linear polarizer on one side of the liquid crystal layer in a state where the liquid crystal compound included in the liquid crystal layer is horizontally oriented, and measuring transmittance while rotating the polarizer at 360 degrees. When the side of the liquid crystal layer or the absorption-type linear polarizer is irradiated with light in the above state and simultaneously the luminance (transmittance) is measured from the other side, the transmittance tends to be low, if the absorption axis or transmission axis coincides with the orientation direction of the liquid crystal alignment film, where the orientation direction can be confirmed through simulation reflecting the refractive index anisotropy of the applied liquid crystal compound or the like. A method of confirming the orientation direction according to the mode of the liquid crystal layer is known, and in the present application, the orientation direction of the alignment film can be confirmed by such a known method.

The alignment film may comprise one or more selected from the group consisting of a material known to exhibit orientation ability by rubbing orientation such as a polyimide compound, a poly(vinyl alcohol) compound, a poly(amic acid) compound, a polystyrene compound, a polyamide compound and a polyoxyethylene compound, or a material known to exhibit orientation ability by light irradiation such as a polyimide compound, a polyamic acid compound, a polynorbornene compound, a phenylmaleimide copolymer compound, a polyvinylcinnamate compound, a polyazobenzene compound, a polyethyleneimide compound, a polyvinylalcohol compound, a polyamide compound, a polyethylene compound, a polystyrene compound, a polyphenylenephthalamide compound, a polyester compound, a CMPI (chloromethylated polyimide) compound, a PVCI (polyvinylcinnamate) compound and a polymethyl methacrylate compound, but is not limited thereto.

The spacer (20c) may maintain the gap between the upper substrate and the lower substrate. The liquid crystal layer may be present in a region where the spacer does not exist between the upper substrate and the lower substrate.

The spacer may be a patterned spacer. The spacer may have a column shape or a partition wall shape. In one example, the spacer may have a partition wall shape. When the spacer has a partition wall shape, it may be advantageous in terms of maintaining the height of the liquid crystal cell and improving physical rigidity of the liquid crystal cell. The partition wall may partition the space between the lower substrate and the upper substrate into two or more spaces. In the region where the spacer does not exist, other films or other layers present in the lower part may be exposed. For example, the second electrode layer may be exposed in a region where the spacer does not exist. The alignment film may cover the spacer and the second electrode layer exposed in the region where the spacer is not present. **In** the liquid crystal cell in which the upper substrate and the lower substrate are bonded together, the alignment film present on the spacer of the

lower substrate and the pressure-sensitive adhesive layer of the upper substrate may be in contact with each other.

The liquid crystal compound and the above-described additives, for example, the dichroic dye, the chiral agent, and the like may be present in the region between the upper substrate and the lower substrate where the spacer does not exist. The shape of the spacer is not particularly limited, which can be applied without limitation to have, for example, a circle, an ellipse, or other polygonal-shaped polyhedrons.

The spacer may comprise a curable resin. The type of the curable resin is not particularly limited, where for example, a thermosetting resin or a photo-curable resin, for example, an ultraviolet curable resin may be used. As the thermosetting resin, for example, a silicone resin, a silicon resin, a fran resin, a polyurethane resin, an epoxy resin, an amino resin, a phenol resin, a urea resin, a polyester resin or a melamine resin, and the like may be used, without being limited thereto. As the ultraviolet curable resin, typically an acrylic polymer, for example, a polyester acrylate polymer, a polystyrene acrylate polymer, an epoxy acrylate polymer, a polyurethane acrylate polymer or a polybutadiene acrylate polymer, a silicone acrylate polymer or an alkyl acrylate polymer, and the like may be used, without being limited thereto.

The spacer may be formed by a patterning process. For example, the spacer may be formed by a photolithography process. The photolithography process may comprise a process of applying a curable resin composition on a base layer or an electrode layer and then irradiating it with ultraviolet rays via a pattern mask. The pattern mask may be patterned into an ultraviolet transmitting region and an ultraviolet blocking region. The photolithography process may further comprise a process of washing the curable resin composition irradiated with ultraviolet rays. The region irradiated with ultraviolet rays is cured, and the region irradiated with no ultraviolet rays remains in a liquid phase, so that it is removed through the washing process, whereby it can be patterned into a partition wall shape. In the photolithography process, a release treatment may be performed on the pattern mask in order to easily separate the resin composition and the pattern mask after ultraviolet irradiation, or a release paper may also be placed between the layer of the resin composition and the pattern mask.

The width (line width), spacing (pitch), thickness and area of the spacer may be appropriately selected within a range without impairing the purpose of the present application. For example, the width (line width) of the spacer may be in a range of 10μm to 500μm or in a range of 10μm to 50μm. The spacing (pitch) of the spacer may be in a range of 10μm to 1000μm or in a range of 100μm to 1000μm. The area of the spacer may be about 5% or more and may be 50% or less, relative to 100% of the total area of the second base layer. When the area of the spacer is within the above range, it may be advantageous to ensure excellent electro-optical properties while adequately securing attachment force between the upper substrate and the lower substrate. The thickness of the spacer may range, for example, from 1μm to 30μm or from 3μm to 20μm.

The optical device may further comprise outer substrates bonded to both sides of the liquid crystal cell. The bonding of the liquid crystal cell and the outer substrates may be performed via an adhesive layer. In one example, as shown in Figure 2, the optical device may comprise a first outer substrate (101), a first adhesive layer (301), the liquid crystal cell (200), a second adhesive layer (302), and a second outer substrate (102) sequentially.

The attachment of the outer substrates to the liquid crystal cell may be performed by a high-temperature and high-pressure autoclave process. Upon such an autoclave process, the pressure may be locally applied to the liquid crystal cell comprising the pressure-sensitive adhesive layer by melting unevenness of the adhesive layer, foreign substances, contraction and expansion of the base layer with the polarizer to be described below, and the like, but such a pressure can express pressing black spots after autoclave. According to the present application, by controlling the storage elastic modulus and tangent delta value at 110°C of the pressure-sensitive adhesive layer included in the liquid crystal cell, the pressure-sensitive adhesive layer is less deformed, and it is difficult for the spacer to penetrate the inside of the pressure-sensitive adhesive layer, even when a local pressure is applied, so that it is possible to prevent pressing black spots.

The first outer substrate and the second outer substrate may each independently be an inorganic substrate or a plastic substrate. A well-known inorganic substrate may be used as the inorganic substrate without any particular limitation. In one example, a glass substrate having excellent light transmittance may be used as the inorganic substrate. As an example of the glass substrate, a soda lime glass substrate, a general tempered glass substrate, a borosilicate glass substrate or an alkali-free glass substrate, and the like may be used, without being limited thereto. As the polymer substrate, a cellulose film such as TAC (triacetyl cellulose) or DAC (diacetyl cellulose); a COP (cyclo olefin copolymer) film such as norbornene derivatives; an acrylic film such as PA (polyacrylate) or PMMA (poly(methyl methacrylate); a PC (polycarbonate) film; a polyolefin film such as PE (polyethylene) or PP (polypropylene); a PVA (polyvinyl alcohol) film; a PI (polyimide) film; a sulfone-based film such as a PSF (polysulfone) film, a PPS (polyphenylsulfone) film or a PES (polyethersulfone) film; a PEEK (polyetheretherketon) film; a PEI (polyetherimide) film; a polyester-based film such as a PEN (polyethylenenaphthatlate) film or a PET (polyethyleneterephtalate) film; or a fluororesin film, and the like may be used, without being limited thereto. In each of the first outer substrate and the second outer substrate, a coating layer of: gold; silver; or a silicon compound such as silicon dioxide or silicon monoxide, or a functional layer such as an antireflection layer may also be present as needed.

In one example, the first outer substrate and/or the second outer substrate may be a glass substrate.

The first outer substrate and the second outer substrate may each have a thickness of about 0.3 mm or more. In

another example, the thickness may be about 0.5 mm or more, 1 mm or more, 1.5 mm or more, or about 2 mm or more, and may also be about 10 mm or less, 9 mm or less, 8 mm or less, 7 mm or less, 6 mm or less, 5 mm or less, 4 mm or less, or about 3 mm or less.

The first outer substrate and the second outer substrate may be a flat substrate or may be a substrate having a curved surface shape. For example, the first outer substrate and the second outer substrate may be simultaneously flat substrates, simultaneously have a curved surface shape, or any one may be a flat substrate and the other may be a substrate having a curved surface shape. In addition, here, in the case of having the curved surface shape at the same time, the respective curvatures or curvature radii may be the same or different. In this specification, the curvature or curvature radius may be measured in a manner known in the industry, and for example, may be measured using a contactless apparatus such as a 2D profile laser sensor, a chromatic confocal line sensor or a 3D measuring confocal microscopy. The method of measuring the curvature or curvature radius using such an apparatus is known.

In the first outer substrate and the second outer substrate, both curvature may have the same sign. In other words, the first and second outer substrates may be bent in the same direction. That is, in the above case, both the center of curvature of the first outer substrate and the center of curvature of the second outer substrate exist in the same portion of the upper part and the lower part of the first and second outer substrates. When the first and second outer substrates are bent in the same direction, the first and second outer substrates can be more efficiently bonded by the adhesive layers, and after bonding, the bonding force deterioration of the first and second outer substrates and the liquid crystal cell and/or the polarizer can be prevented more effectively.

One side of the first adhesive layer may contact the first outer substrate. When another component (for example, a first polarizer to be described below) is not further included between the first outer substrate and the liquid crystal cell, the other side of the first adhesive layer may contact the liquid crystal cell, and when another component is further included, the other side of the first adhesive layer may contact another component. One side of the second adhesive layer may contact the second outer substrate. When another component (for example, a second polarizer to be described below) is not further included between the second outer substrate and the liquid crystal cell, the other side of the second adhesive layer may contact the liquid crystal cell, and when another component is further included, the other side of the second adhesive layer may contact another component.

The optical device may further comprise a first polarizer positioned between the first outer substrate and the liquid crystal cell, and a second polarizer positioned between the second outer substrate and the liquid crystal cell. Figure 2 illustratively shows an optical device comprising a first polarizer (401) and a second polarizer (402). Specifically, the first polarizer may be positioned between the first adhesive layer and the liquid crystal cell, and the second polarizer may be positioned between the second adhesive layer and the liquid crystal cell.

When the optical device further comprises the first polarizer and the second polarizer, the optical device may further comprise a third adhesive layer between the first polarizer and the liquid crystal cell, and a fourth adhesive layer between the second polarizer and the liquid crystal cell. Figure 2 illustratively shows an optical device comprising a third adhesive layer (303) and a fourth adhesive layer (304). One side of the third adhesive layer may contact the first polarizer, and the other side may contact the liquid crystal cell. One side of the fourth adhesive layer may contact the second polarizer, and the other side may contact the liquid crystal cell. In one example, when a protective film of the polarizer is formed on one side of the first polarizer facing the third adhesive layer, one side of the third adhesive layer may contact the protective film. In one example, when a protective film of the polarizer is formed on one side of the second polarizer facing the fourth adhesive layer, one side of the fourth adhesive layer may contact the protective film.

In this specification, the term polarizer means a film, sheet or element having a polarization function. The polarizer is a functional element capable of extracting light vibrating in one direction from incident light vibrating in multiple directions.

The first polarizer and the second polarizer may each be an absorption type polarizer or a reflection type polarizer. In this specification, the absorption type polarizer means an element showing selective transmission and absorption characteristics with respect to incident light. The polarizer may transmit, for example, light vibrating in any one direction from incident light vibrating in multiple directions, and may absorb light vibrating in the other directions. In this specification, the reflection type polarizer means an element showing selective transmission and reflection characteristics with respect to incident light. The polarizer may transmit, for example, light vibrating in any one direction from incident light vibrating in multiple directions, and may reflect light vibrating in the other directions.

As the absorption type polarizer, for example, a polarizing layer in which iodine is dyed on a polymer stretched film such as a PVA (poly(vinyl alcohol)) stretched film, or a guest-host type polarizing layer that liquid crystals polymerized in an oriented state are used as a host, and dichroic dyes arranged according to the orientation of the liquid crystals are used as a guest may be used, but it is not limited thereto.

As the reflection type polarizer, for example, a reflective polarizing layer known as a so-called DBEF (Dual Brightness Enhancement Film), or a reflective polarizing layer formed by coating a liquid crystal compound such as LLC (Lyotropic liquid crystal) may be used, but it is not limited thereto.

The polarizer may be a linear polarizer. In this specification, the linear polarizer means a case in which the

selectively transmitted light is linearly polarized light vibrating in any one direction, and the selectively absorbed or reflected light is linearly polarized light vibrating in a direction perpendicular to the vibration direction of the linearly polarized light. In the case of the absorption type linear polarizer, the light transmission axis and the light absorption axis may be perpendicular to each other. In the case of the reflection type linear polarizer, the light transmission axis and the light reflection axis may be perpendicular to each other.

A protective film, an antireflection film, a retardation film, a surface treatment layer, and the like may be additionally formed on one side or both sides of the first polarizer and the second polarizer, respectively. The retardation film may be, for example, a 1/4 wave plate or a 1/2 wave plate. The 1/4 wave plate may have an in-plane retardation value for light having a wavelength of 550 nm in a range of about 100 nm to 180 nm, 100 nm or 150 nm. The 1/2 wave plate may have an in-plane retardation value for light having a wavelength of 550 nm in a range of about 200 nm to 300 nm or 250 nm to 300 nm. The retardation film may be, for example, a stretched polymer film or a liquid crystal polymerization film. As the protective film of the polarizer, a film of a known material may be used. As such a material, for example, a thermoplastic resin having excellent transparency, mechanical strength, thermal stability, moisture barrier properties, or isotropic properties, and the like may be used. An example of such a resin may be exemplified by cellulose resins such as TAC (triacetyl cellulose), polyester resins, polyethersulfone resins, polysulfone resins, polycarbonate resins, polyamide resins, polyimide resins, polyolefin resins, (meth)acrylic resins, cyclic polyolefin resins such as norbornene resins, polyarylate resins, polystyrene resins, polyvinyl alcohol resins, or mixtures thereof, and the like. The first protective film and the second protective film may be films of the same material or films of different materials. As the adhesive used for attaching the polarizer, retardation film, protective film, and the like, acrylic adhesives, isocyanate-based adhesives, polyvinyl alcohol-based adhesives, gelatin-based adhesives, vinyl-based, latex-based, or water-based polyesters, and the like may be exemplified, but it is not limited thereto.

The first polarizer and the second polarizer may each have transmittance for light with a wavelength of 550 nm in a range of 40% to 50%. The transmittance may mean single transmittance of the polarizer for light with a wavelength of 550 nm. The single transmittance of the polarizer may be measured using, for example, a spectrometer (V7100, manufactured by Jasco). For example, after air is set as the base line in a state where the polarizer sample (without upper and lower protective films) is mounted on the device, and each transmittance is measured in a state where the axis of the polarizer sample is aligned vertically and horizontally with the axis of the reference polarizer, the single transmittance can be calculated.

The light transmission axis of the first polarizer and the light transmission axis of the second polarizer may be perpendicular to each other. Specifically, the angle formed by the light transmission axis of the first polarizer and the light transmission axis of the second polarizer may be in a range of 80 degrees to 100 degrees or 85 degrees to 95 degrees. When the light transmission axis of the first polarizer and the light transmission axis of the second polarizer are perpendicular to each other, light leakage and the like may occur depending on the separation distance between the first polarizer and the second polarizer.

The first to fourth adhesive layers may each have a thickness of 10 μm or more. The thicknesses of the first to fourth adhesive layers may each be 50μm or more, 100μm or more, 150μm or more, 200μm or more, 250μm or more, 300μm or more, 350μm or more, or 380μm or more, and may be 2,000μm or less, 1,800μm or less, 1,600μm or less, 1,400μm or less, 1,200μm or less, 1,000μm or less, or 800μm or less. When each thickness of the adhesive layers is within the above range, it may be advantageous to secure structural stability and uniform appearance characteristics of the optical device by minimizing defects in the bonding process of the outer substrates.

In one example, the thicknesses of the first adhesive layer and the second adhesive layer may each be 400μm or more, 500μm or more, 600μm or more, or 700μm or more. Through this, it may be advantageous to secure structural stability and uniform appearance characteristics of the optical device by minimizing defects in the bonding process of the outer substrates.

In one example, the thicknesses of the third adhesive layer and the fourth adhesive layer may each be 380μm or less. Through this, the separation distance between the first polarizer and the second polarizer is minimized, thereby it can reduce light leakage and at the same time secure structural safety of the optical device.

The first to fourth adhesive layers may each have a single-layer structure of one adhesive layer or may be a laminate of two or more sub-adhesive layers. The thickness and number of sub-adhesive layers may be controlled in consideration of the desired thickness of the adhesive layer. In one example, the thickness of the adhesive layer with a single-layer structure of one sheet, or the sub-adhesive layer may be in the range of 100μm to 500μm or 300μm to 400μm.

As one example, the storage modulus of the first to fourth adhesive layers may each be within a range of 1 MPa to 100 MPa. As another example, the storage elastic moduli of the first to fourth adhesive layers may each be 2 MPa or more or 4 MPa or more, and may be 100 MPa or less, 80 MPa or less, 60 MPa or less, 40 MPa or less, or 20 MPa or less. The storage elastic modulus may be a value measured at a temperature of 25°C and a frequency of 1 Hz.

As one example, the first to fourth adhesive layers may each have a Young's modulus (E) in a range of 0.1 MPa to 100 MPa. As another example, the Young's modulus (E) of the first to fourth adhesive layers may each be 0.2 MPa or more, 0.4 MPa or more, 0.6 MPa or more, 0.8 MPa or more, 1 MPa or more, 5 MPa or more, or about 10 MPa or more, and may be

about 95 MPa or less, 80 MPa or less, 75 MPa or less, 70 MPa or less, 65 MPa or less, 60 MPa or less, 55 MPa or less, or about 50 MPa or less. The Young's modulus (E), for example, can be measured in the manner specified in ASTM D882, and can be measured using the equipment that can cut the film in the form provided by the relevant standard and measure the stress-strain curve (can measure the force and length simultaneously), for example, a UTM (universal testing machine). When the Young's moduli of the adhesive layers included in the optical device are within the above range, it may be more advantageous to ensure excellent durability of the optical device. When the adhesive layer is a laminate of at least two or more sub-adhesive layers, each of the sub-adhesive layers may satisfy the above Young's modulus range.

As one example, the first to fourth adhesive layers may each have a coefficient of thermal expansion of 2,000 ppm/K or less. In another example, the coefficient of thermal expansion may be about 1,900 ppm/K or less, 1,700 ppm/K or less, 1,600 ppm/K or less, or about 1,500 ppm/K or less, or may be about 10 ppm/K or more, 20 ppm/K or more, 30 ppm/K or more, 40 ppm/K or more, 50 ppm/K or more, 60 ppm/K or more, 70 ppm/K or more, 80 ppm/K or more, 90 ppm/K or more, 100 ppm/K or more, 200 ppm/K or more, 300 ppm/K or more, 400 ppm/K or more, 500 ppm/K or more, 600 ppm/K or more, 700 ppm/K or more, or about 800 ppm/K or more. The coefficient of thermal expansion of the adhesive layer can be measured, for example, according to the regulations of ASTM D696, where the coefficient of thermal expansion can be calculated by cutting it in the form provided by the relevant standard, and measuring the change in length per unit temperature, and can be measured by a known method such as the TMA (thermo-mechanic analysis). When the coefficients of thermal expansion of the adhesive layers included in the optical device are within the above range, it may be more advantageous to ensure excellent durability of the optical device. When the adhesive layer is a laminate of at least two or more sub-adhesive layers, each of the sub-adhesive layers may satisfy the range of the coefficient of thermal expansion.

The first to fourth adhesive layers may each be a thermoplastic polyurethane (TPU) adhesive layer, a polyamide adhesive layer, a polyester adhesive layer, an EVA (ethylene vinyl acetate) adhesive layer, an acrylic adhesive layer, a silicone adhesive layer or a polyolefin adhesive layer. According to one example of the present application, the first to fourth adhesive layers may each be a thermoplastic polyurethane adhesive layer.

The optical device may further comprise outer layers surrounding side surfaces of the liquid crystal cell. Figure 2 illustratively shows an optical device comprising the outer layers (501, 502). In the optical device, the top area of the liquid crystal cell may be smaller than the top area of the first outer substrate or the second outer substrate. Also, the top area of the liquid crystal cell may be smaller than the top areas of the first to fourth adhesive layers included in the optical device.

In one example, the liquid crystal cell may be encapsulated by the adhesive layers and the outer layers. In the present application, the term encapsulation may mean covering the top surface of the liquid crystal cell with the adhesive layers and the outer layers. In one example, when the optical device comprises the first adhesive layer and the second adhesive layer, the liquid crystal cell may be encapsulated by the first adhesive layer, the second adhesive layer, and the outer layers. In one example, when the optical device comprises the first adhesive layer, the second adhesive layer, the third adhesive layer, and the fourth adhesive layer, the liquid crystal cell may be encapsulated by the third adhesive layer, the fourth adhesive layer, and the outer layers. The durability and weather resistance of the optical device are greatly improved by such an encapsulation structure, and as a result, it can be stably applied to outdoor applications such as a sunroof.

The outer layer may comprise, for example, a thermoplastic polyurethane (TPU) adhesive, a polyamide adhesive, a polyester adhesive, an EVA (ethylene vinyl acetate) adhesive, an acrylic adhesive, a silicone adhesive, or a polyolefin adhesive. In one example, the outer layer may be formed of the same material as that of the adhesive layer.

The present application also relates to a method for manufacturing an optical device. The manufacturing method of the optical device may comprise a step of performing an autoclave treatment on a laminate sequentially comprising a first outer substrate, a first adhesive layer, a liquid crystal cell, a second adhesive layer, and a second outer substrate. The liquid crystal cell may be encapsulated through the autoclave treatment. Unless otherwise specified in the manufacturing method of the optical device, the contents described in the optical device may be equally applied.

The laminate may further comprise outer layers surrounding the side surfaces of the liquid crystal cell.

In the case of manufacturing an optical device further comprising a first polarizer and a second polarizer, the autoclave treatment may be performed on a laminate comprising a first outer substrate, a first adhesive layer, a first polarizer, a third adhesive layer, a liquid crystal cell, a second polarizer, a fourth adhesive layer, a second adhesive layer, and a second outer substrate sequentially.

When the optical device further comprises other elements in addition to the liquid crystal cell and the polarizer, the laminate may further comprise other elements in addition to the liquid crystal cell and the polarizer at a desired location.

The autoclave process may be performed by heating and/or pressurizing the laminate.

The conditions of the autoclave process are not particularly limited, and it may be performed under an appropriate temperature and pressure, for example, depending on the type of the applied adhesive layers. The temperature of a typical autoclave process is about 80°C or more, 90°C or more, 100°C or more, and the pressure is 2 atmospheres or more, without being limited thereto. The upper limit of the process temperature may be about 200°C or less, 190°C or less, 180°C or less, or 170°C or less or so, and the upper limit of the process pressure may be about 10 atm or less, 9 atm or less, 8 atm

or less, 7 atm or less, or 6 atm or less or so.

The optical device may be a transmittance-variable device. The transmittance-variable device can switch between at least two states of different transmittance. **In** one example, the transmittance-variable device may be a device capable of switching between a transparent and black mode states.

The transmittance-variable device in the transparent mode state may have a transmittance of at least 10% or more, 15% or more, 20% or more, 25% or more, 30% or more, 35% or more, 40% or more, 45% or more, 50% or more, 55 % or more, 60% or more, 65% or more, 70% or more, 75% or more, or 80% or more or so. In another example, the transmittance in the transparent mode state may also be 100% or less, 95% or less, 90% or less, or 85% or less or so. However, the higher the transmittance in the transparent mode state, it is more advantageous, so that the upper limit is not particularly limited.

In the black mode state, the transmittance of the transmittance-variable device may be 60% or less, 55% or less, 50% or less, 45% or less, 40% or less, 35% or less, 30% or less, 25% or less, 20% or less, 15% or less, 10% or less or 5% or less. In another example, the transmittance in the black mode state may also be 0% or more, 5% or more, 10% or more, 15% or more, 20% or more, or 25% or more or so. However, the lower the transmittance in the black mode state, it is more advantageous, so that the lower limit of the transmittance in the black mode state is not particularly limited.

The transmittance may be, for example, straight light transmittance. The straight light transmittance is the percentage of the ratio of the light transmitted in the same direction as the incident direction to the light incident on the device. For example, if the device is in the form of a film or sheet, the transmittance can be defined as the percentage of light transmitted through the device in a direction parallel to the normal direction among light incident in a direction parallel to the normal direction of the surface of the film or sheet.

The transmittance may be the transmittance for any one wavelength in the visible light region, for example, the range of about 400 to 700 nm or about 380 to 780 nm, the transmittance for the entire visible light region, the maximum or minimum transmittance among the transmittance for the entire visible light region, or the average value of transmittance in the visible light region.

The optical device can be used for various applications, and for example, can be used for eyewear such as sunglasses or AR (augmented reality) or VR (virtual reality) eyewear, an outer wall of a building or a sunroof for a vehicle, and the like. In one example, the optical device itself may be a sunroof for a vehicle. For example, in an automobile including an auto body in which at least one opening is formed, the optical device or the sunroof for a vehicle attached to the opening can be mounted and used.

[Effects of Invention]

The present application relates to an optical device. The optical device of the present application can properly maintain a cell gap of a liquid crystal cell, have excellent adhesion between an upper substrate and a lower substrate, and can prevent pressing black spots after a high-temperature and high-pressure autoclave process.

[Brief Description of Drawings]

Figure 1 illustratively shows a liquid crystal cell of the present application.
Figure 2 illustratively shows an optical device of the present application.
Figure 3 shows an image of Example 1 after autoclave.
Figure 4 shows an image of Example 2 after autoclave.
Figure 5 shows an image of Example 3 after autoclave.
Figure 6 shows an image of Example 4 after autoclave.
Figure 7 shows an image of Example 5 after autoclave.
Figure 8 shows an image of Example 6 after autoclave.
Figure 9 shows an image of Comparative Example 1 after autoclave.
Figure 10 shows an image of Comparative Example 2 after autoclave.
Figure 11 shows an image of Comparative Example 3 after autoclave.
Figure 12 illustratively shows an enlarged image of a black spot in Comparative Example 1 and the principle of occurrence of black spots.

[Explanation of Reference Numerals]

10a: first base layer, 10b: first electrode layer, 10c: pressure-sensitive adhesive layer, 20a: second base layer, 20b: second electrode layer, 20c: spacer, 20d: alignment film, 30: liquid crystal layer, 101: first outer substrate, 102: second

outer substrate, 200: liquid crystal cell, 301: first adhesive layer, 302: second adhesive layer, 303: third adhesive layer, 304: fourth adhesive layer, 401: first polarizer, 402: second polarizer, 501, 502: outer layer

[Specific Contents for Implementing Invention]

Hereinafter, the present application is specifically described through examples, but the scope of the present application is not limited by the following examples.

**Example 1**

**Manufacturing of upper substrate**

An OCA type pressure-sensitive adhesive resin (KR3700, ShinEtsu) was mixed with a toluene solvent to have a solid concentration of 25 wt%, and 15 parts by weight of a crosslinking agent A (tetrakis(dimethylsiloxy)silane, Gelest) and 1 part by weight of a platinum catalyst (CAT-PL-56, ShinEtsu) relative to 100 parts by weight of the pressure-sensitive adhesive resin were added thereto to prepare a pressure-sensitive adhesive composition. The pressure-sensitive adhesive composition was coated on a fluorine release film (FSC6, Nippa) with a bar coating, and then heated at a temperature of 140°C for 6 minutes, thereby forming a pressure-sensitive adhesive layer A with a final thickness of about 10μm. An upper substrate was manufactured by laminating the pressure-sensitive adhesive layer on an ITO layer of a PET-ITO film. The PET-ITO film is a film in which an ITO (indium tin oxide) layer is deposited to a thickness of about 30 nm on a highly stretched PET (polyethyleneterephtalate) film (OCF, SKC), which has a total thickness of about 145μm. The above-manufactured upper substrate has a structure in which the highly stretched PET film/ITO layer/pressure-sensitive adhesive layer/release film are laminated in this order.

**Manufacturing of lower substrate**

An acrylic resin composition (trade name: KAD-03, manufacturer: MINUTA Tech) was coated on the ITO layer of the same PET-ITO film as that used in the upper substrate, and then patterned into a tetragonal shape by a photolithography method, thereby forming a partition wall -shaped spacer. The height of the partition wall shape is 6μm, the pitch (interval between two facing sides of the tetragon) is 350μm, and the line width is 15μm. Subsequently, a vertical alignment film (5661LB3, Nissan) was coated on the spacer to a thickness of about 300 nm, and then rubbed with a rubbing cloth to manufacture a lower substrate.

**Bonding of liquid crystal cell**

The fluorine release film was peeled off from the upper substrate. A liquid crystal composition was coated on the alignment film of the lower substrate, and then laminated on the upper substrate to bond a liquid crystal cell. The liquid crystal composition is a mixture of a liquid crystal compound (SHN-7002XX T12, JNC) having refractive index anisotropy ($\Delta$n) of 0.094 and negative dielectric constant anisotropy, and a chiral additive (S811, Merck). The prepared liquid crystal cell is a reverse TN mode liquid crystal cell with a cell gap of 6μm, where the chiral pitch is 20μm.

**Example 2**

A liquid crystal cell was manufactured in the same manner as in Example 1, except that instead of the pressure-sensitive adhesive layer A of Example 1, a pressure-sensitive adhesive layer B was formed as follows. An OCA type pressure-sensitive adhesive resin (KR3700, ShinEtsu) was mixed with a toluene solvent to have a solid concentration of 25 wt%, and 10 parts by weight of a crosslinking agent B (n-octadecyltrimethoxysilane, Gelest) and 1 part by weight of a platinum catalyst (CAT-PL-56, ShinEtsu) relative to 100 parts by weight of the pressure-sensitive adhesive resin were added thereto to prepare a pressure-sensitive adhesive composition. The pressure-sensitive adhesive composition was coated on a fluorine release film (FSC6, Nippa) with a bar coating, and then heated at a temperature of 140°C for 3 minutes, thereby forming a pressure-sensitive adhesive layer B with a final thickness of about 10μm.

**Example 3**

A liquid crystal cell was manufactured in the same manner as in Example 1, except that instead of the pressure-sensitive adhesive layer A of Example 1, a pressure-sensitive adhesive layer C was formed as follows. An OCA type pressure-sensitive adhesive resin (KR3700, ShinEtsu) was mixed with a toluene solvent to have a solid concentration of 25 wt%, and 3 parts by weight of a crosslinking agent C (dodecyltrimethoxysilane, Gelest) and 1 part by weight of a

platinum catalyst (CAT-PL-56, ShinEtsu) relative to 100 parts by weight of the pressure-sensitive adhesive resin were added thereto to prepare a pressure-sensitive adhesive composition. The pressure-sensitive adhesive composition was coated on a fluorine release film (FSC6, Nippa) with a bar coating, and then heated at a temperature of 140°C for 3 minutes, thereby forming a pressure-sensitive adhesive layer C with a final thickness of about 10μm.

**Example 4**

A liquid crystal cell was manufactured in the same manner as in Example 1, except that instead of the pressure-sensitive adhesive layer A of Example 1, the pressure-sensitive adhesive layer D was formed as follows. An OCA type pressure-sensitive adhesive resin (KR3700, ShinEtsu) was mixed with a toluene solvent to have a solid concentration of 25 wt%, and 15 parts by weight of a crosslinking agent A (tetrakis(dimethylsiloxy)silane, Gelest) and 1 part by weight of a platinum catalyst (CAT-PL-56, ShinEtsu) relative to 100 parts by weight of the pressure-sensitive adhesive resin were added thereto to prepare a pressure-sensitive adhesive composition. The pressure-sensitive adhesive composition was coated on a fluorine release film (FSC6, Nippa) with a bar coating, and then heated at a temperature of 140°C for 3 minutes, thereby forming a pressure-sensitive adhesive layer D with a final thickness of about 10μm.

**Example 5**

A liquid crystal cell was manufactured in the same manner as in Example 1, except that instead of the pressure-sensitive adhesive layer A of Example 1, a pressure-sensitive adhesive layer E was formed as follows. An OCA type pressure-sensitive adhesive resin (SS9242, KCC) was mixed with a toluene solvent to have a solid concentration of 25 wt%, and 1 part by weight of a crosslinking agent D (S0016B, KCC), 3 parts by weight of a crosslinking agent E (SC0025B, KCC), and 1 part by weight of a platinum catalyst (SK0010C, KCC), relative to 100 parts by weight of the pressure-sensitive adhesive resin, were added thereto to prepare a pressure-sensitive adhesive composition. The pressure-sensitive adhesive composition was coated on a fluorine release film (FSC6, Nippa Co.) with bar coating, and then heated at 140°C for 6 minutes, thereby forming a pressure-sensitive adhesive layer E with a final thickness of about 10μm.

**Example 6**

A liquid crystal cell was manufactured in the same manner as in Example 1, except that instead of the pressure-sensitive adhesive layer A of Example 1, a pressure-sensitive adhesive layer F was formed as follows. An OCA type pressure-sensitive adhesive resin (SS9242, KCC) was mixed with a toluene solvent to have a solid concentration of 25 wt%, and 0.5 parts by weight of a crosslinking agent D (S0016B, KCC), 3.5 parts by weight of a crosslinking agent E (SC0025B, KCC), and 1 part by weight of a platinum catalyst (SK0010C, KCC), relative to 100 parts by weight of the pressure-sensitive adhesive resin, were added thereto to prepare a pressure-sensitive adhesive composition. The pressure-sensitive adhesive composition was coated on a fluorine release film (FSC6, Nippa Co.) with bar coating, and then heated at 140°C for 6 minutes, thereby forming a pressure-sensitive adhesive layer F with a final thickness of about 10μm.

**Comparative Example 1**

A liquid crystal cell was manufactured in the same manner as in Example 1, except that instead of the pressure-sensitive adhesive layer A of Example 1, a pressure-sensitive adhesive layer G was formed as follows. An OCA type pressure-sensitive adhesive resin (KR3700, ShinEtsu) was mixed with a toluene solvent to have a solid concentration of 25 wt%, and 15 parts by weight of a crosslinking agent A (tetrakis(dimethylsiloxy)silane, Gelest) and 1 part by weight of a platinum catalyst (CAT-PL-56, ShinEtsu) relative to 100 parts by weight of the pressure-sensitive adhesive resin were added thereto to prepare a pressure-sensitive adhesive composition. The pressure-sensitive adhesive composition was coated on a fluorine release film (FSC6, Nippa) with a bar coating, and then heated at a temperature of 140°C for 1 minute, thereby forming a pressure-sensitive adhesive layer G with a final thickness of about 10μm.

**Comparative Example 2**

A liquid crystal cell was manufactured in the same manner as in Example 1, except that instead of the pressure-sensitive adhesive layer A of Example 1, a pressure-sensitive adhesive layer H was formed as follows. An OCA type pressure-sensitive adhesive resin (KR3700, ShinEtsu) was mixed with a toluene solvent to have a solid concentration of 25 wt%, and 15 parts by weight of a crosslinking agent A (tetrakis(dimethylsiloxy)silane, Gelest) and 1 part by weight of a platinum catalyst (CAT-PL-56, ShinEtsu) relative to 100 parts by weight of the pressure-sensitive adhesive resin were added thereto to prepare a pressure-sensitive adhesive composition. The pressure-sensitive adhesive composition was

coated on a fluorine release film (FSC6, Nippa) with a bar coating, and then heated at a temperature of 130°C for 3 minutes, thereby forming a pressure-sensitive adhesive layer H with a final thickness of about 10μm.

**Comparative Example 3**

A liquid crystal cell was manufactured in the same manner as in Example 1, except that instead of the pressure-sensitive adhesive layer A of Example 1, a pressure-sensitive adhesive layer I was formed as follows. An OCA type pressure-sensitive adhesive resin (KR3700, ShinEtsu) was mixed with a toluene solvent to have a solid concentration of 25 wt%, and 15 parts by weight of a crosslinking agent A (tetrakis(dimethylsiloxy)silane, Gelest) and 2 parts by weight of a platinum catalyst (CAT-PL-56, ShinEtsu) relative to 100 parts by weight of the pressure-sensitive adhesive resin were added thereto to prepare a pressure-sensitive adhesive composition. The pressure-sensitive adhesive composition was coated on a fluorine release film (FSC6, Nippa) with a bar coating, and then heated at a temperature of 140°C for 3 minutes, thereby forming a pressure-sensitive adhesive layer I with a final thickness of about 10μm.

**Measurement Example 1. Measurement of storage elastic modulus and tangent delta value of the pressure-sensitive adhesive layer**

A storage elastic modulus and a tangent delta value of a pressure-sensitive adhesive layer were measured using TA's ARES G2, Rheometer. As described in Examples and Comparative Example, a pressure-sensitive adhesive layer was formed on a fluorine release film, and then the fluorine release film was peeled off to obtain the pressure-sensitive adhesive layer. A disc-shaped pressure-sensitive adhesive layer sample having a diameter of about 8 mm and a thickness of about 1000 μm was placed on an Al plate having a diameter of about 8 mm, and the measurement was performed. During the measurement, the storage elastic modulus (G') and the loss elastic modulus (G") are measured, where the tangent delta may be obtained from a value calculated as G"/G'. The storage elastic moduli and tangent delta values obtained under a condition of a frequency of 1 rad/sec and a temperature of 110°C, and a condition of a frequency of 1 rad/sec and a temperature of 25°C were described in Table 1 below.

**Evaluation Example 1. Evaluation of occurrence of black spots after autoclave**

A laminate comprising a first outer substrate (101), a first adhesive layer (301), a first polarizer (401), a third adhesive layer (303), a liquid crystal cell (200), a fourth adhesive layer (304), a second polarizer (402), a second adhesive layer (302), and a second outer substrate (102) sequentially, and comprising outer layers (501, 502) surrounding the side surfaces of the liquid crystal cell (200) was prepared.

As the liquid crystal cell, the liquid crystal cells of Examples 1 to 6 and Comparative Examples 1 to 3 were each used. As the first outer substrate, a glass substrate having a thickness of about 3mm, an area of width × length = 1100mm × 800mm, and a curvature radius of about 2,470R was used. As the second outer substrate, a glass substrate having a thickness of about 3mm, an area of width × length = 1100mm × 800mm, and a curvature radius of about 2,400R was used. The first polarizer and the second polarizer were each a PVA-based polarizer, and were disposed such that the light transmission axis of the first polarizer and the light transmission axis of the second polarizer formed about 90 degrees. As each of the first adhesive layer and the second adhesive layer, a TPU layer (Argotec) having a thickness of 760μm was used, and as each of the third adhesive layer and the fourth adhesive layer, a TPU layer (Argotec) having a thickness of 380μm was used. The TPU layer (Argotec) had a thermal expansion coefficient of 307 ppm/K, a storage elastic modulus of 3,357,730 Pa, and a loss elastic modulus of 1,485,510 Pa.

An optical device with the structure of Figure 2 was manufactured by performing an autoclave process on the laminate at a temperature of about 110°C and a pressure of about 3 atm for 3 hours. The optical device after the autoclave process was evaluated for occurrence of black spots, and the results were described in Table 1 below. Figures 3 to 8 show images of Examples 1 to 6 after autoclave, respectively. Figures 9 to 11 show images of Comparative Examples 1 to 3 after autoclave, respectively. In Examples 1 to 6, no pressing black spots after autoclave were observed, but in Comparative Examples 1 to 3, pressing black spots after autoclave were observed. Figure 12 illustratively shows an enlarged image of a black spot in Comparative Example 1 and the principle of occurrence of black spots (Figure 12(A): before autoclave process, Figure 12(B): after autoclave process, Figure 12(C): enlarging the black spot portion, Figure 12(D): occurrence principle of black spots). Figure 12(D) illustrated only the first base layer (10a), the pressure-sensitive adhesive layer (10c), the second base layer (20a), and the spacer (20c). In Figures 12(B) and (C), portions without black spots are portions where the pressure is not applied to the liquid crystal cell, and portions with black spots are portions where the pressure is locally applied to the liquid crystal cell. When a local pressure is applied to the liquid crystal cell, the liquid crystals move due to the pressure (move in the direction of the arrow in Figure 12(D), whereby the escaped part is expressed as the black spot, and when the moved liquid crystals gather together, crowding of the liquid crystals (bright parts around the black spot) occurs.

[Table 1]

| | | Storage elastic modulus (Pa) (1rad/sec, 110°C) | Tangent delta (1rad/sec, 110°C) | Storage elastic modulus (Pa) (1rad/sec, 25°C) | Tangent delta (1rad/sec, 25°C) | Black spot occurrence after autoclave |
|---|---|---|---|---|---|---|
| Example | 1 | 23,300 | 0.27 | 406,812 | 1.24 | X |
| | 2 | 22,659 | 0.29 | 201,919 | 1.56 | X |
| | 3 | 25,408 | 0.22 | 36,040 | 0.45 | X |
| | 4 | 19,628 | 0.31 | 327,422 | 1.50 | X |
| | 5 | 50,784 | 0.25 | 1,064,740 | 0.94 | X |
| | 6 | 18,894 | 0.19 | 222,332 | 1.30 | X |
| Comparative Example | 1 | 17,317 | 0.37 | 201,481 | 1.27 | O |
| | 2 | 15,722 | 0.33 | 188,630 | 1.39 | O |
| | 3 | 14,308 | 0.33 | 141,581 | 1.54 | O |

**Claims**

1. An optical device comprising a liquid crystal cell (200), which comprises

   an upper substrate including a first base layer (10a) and a pressure-sensitive adhesive layer (10c),
   a lower substrate including a second base layer (20a) and spacers (20c), and
   a liquid crystal layer (30) including a liquid crystal compound between the upper substrate and the lower substrate, wherein
   the optical device further comprises a first electrode layer (10b) between the first base layer (10a) and the pressure-sensitive adhesive layer (10c), and further comprises a second electrode layer (20b) between the second base layer (20a) and the spacers (20c),
   **characterised in that**
   the pressure-sensitive adhesive layer (10c) has a storage elastic modulus of 18,000 Pa or more at a temperature of 110°C and a frequency of 1 rad/sec and a tangent delta value of 0.32 or less at a temperature of 110°C and a frequency of 1 rad/sec.

2. The optical device according to claim 1, wherein the upper substrate comprises no alignment film (20d), and the lower substrate further comprises an alignment film (20d).

3. The optical device according to claim 1, wherein the pressure-sensitive adhesive layer (10c) comprises a silicone pressure-sensitive adhesive.

4. The optical device according to claim 1, wherein the pressure-sensitive adhesive layer (10c) has a storage elastic modulus at a temperature of 110°C and a frequency of 1 rad/sec in a range of 18,000 Pa to 100,000 Pa.

5. The optical device according to claim 1, wherein the pressure-sensitive adhesive layer (10c) has a tangent delta value at a temperature of 110°C and a frequency of 1 rad/sec in a range of 0.1 to 0.32.

6. The optical device according to claim 1, wherein the pressure-sensitive adhesive layer (10c) has a storage elastic modulus of 10,000 Pa to 1,100,000 Pa at a temperature of 25°C and a frequency of 1 rad/sec.

7. The optical device of claim 1, wherein the pressure-sensitive adhesive layer (10c) has a tangent delta value of 0.1 to 2.0 at a temperature of 25°C and a frequency of 1 rad/sec.

8. The optical device according to claim 1, sequentially comprising a first outer substrate (101), a first adhesive layer (301), the liquid crystal cell (200), a second adhesive layer (302), and a second outer substrate (102).

9. The optical device according to claim 8, wherein the first outer substrate (101) and the second outer substrate (102) are each a glass substrate.

10. The optical device according to claim 8, wherein the first adhesive layer (301) and the second adhesive layer (302) are each a thermoplastic polyurethane adhesive layer, a polyamide adhesive layer, a polyester adhesive layer, an Ethylene Vinyl Acetate adhesive layer, an acrylic adhesive layer, a silicone adhesive layer, or a polyolefin adhesive layer.

11. The optical device according to claim 8, further comprising a first polarizer (401) between the first adhesive layer (301) and the liquid crystal cell (200) and a second polarizer (402) between the second adhesive layer (302) and the liquid crystal cell (200).

12. The optical device according to claim 11, wherein the transmission axis of the first polarizer (401) and the transmission axis of the second polarizer (402) are orthogonal to each other.

13. The optical device according to claim 11, further comprising a third adhesive layer (303) between the first polarizer (401) and the liquid crystal cell (200) and a fourth adhesive layer (304) between the second polarizer (402) and the liquid crystal cell (200).

14. The optical device according to claim 13, wherein the third adhesive layer (303) and the fourth adhesive layer (304) are each a thermoplastic polyurethane adhesive layer, a polyamide adhesive layer, a polyester adhesive layer, an Ethylene Vinyl Acetate adhesive layer, an acrylic adhesive layer, a silicone adhesive layer, or a polyolefin adhesive layer.

**Patentansprüche**

1. Optische Vorrichtung, die eine Flüssigkristallzelle (200) umfasst, die Folgendes umfasst:

   ein oberes Substrat, das eine erste Basisschicht (10a) und eine druckempfindliche Klebeschicht (10c) beinhaltet,
   ein unteres Substrat, das eine zweite Basisschicht (20a) und Abstandshalter (20c) beinhaltet, und
   eine Flüssigkristallschicht (30), die eine Flüssigkristallverbindung zwischen dem oberen Substrat und dem unteren Substrat beinhaltet, wobei
   die optische Vorrichtung ferner eine erste Elektrodenschicht (10b) zwischen der ersten Basisschicht (10a) und der druckempfindlichen Klebeschicht (10c) umfasst und ferner eine zweite Elektrodenschicht (20b) zwischen der zweiten Basisschicht (20a) und den Abstandshaltern (20c) umfasst,
   **dadurch gekennzeichnet, dass**
   die druckempfindliche Klebeschicht (10c) einen Speicherelastizitätsmodul von 18.000 Pa oder mehr bei einer Temperatur von 110 °C und einer Frequenz von 1 rad/s und einen Tangentendeltawert von 0,32 oder weniger bei einer Temperatur von 110 °C und einer Frequenz von 1 rad/s aufweist.

2. Optische Vorrichtung nach Anspruch 1, bei der das obere Substrat keinen Ausrichtungsfilm (20d) umfasst und das untere Substrat ferner einen Ausrichtungsfilm (20d) umfasst.

3. Optische Vorrichtung nach Anspruch 1, bei der die druckempfindliche Klebeschicht (10c) einen druckempfindlichen Silikonklebstoff umfasst.

4. Optische Vorrichtung nach Anspruch 1, bei der die druckempfindliche Klebeschicht (10c) einen Speicherelastizitätsmodul bei einer Temperatur von 110 °C und einer Frequenz von 1 rad/s in einem Bereich von 18.000 Pa bis 100.000 Pa aufweist.

5. Optische Vorrichtung nach Anspruch 1, bei der die druckempfindliche Klebeschicht (10c) einen Tangentendeltawert bei einer Temperatur von 110 °C und einer Frequenz von 1 rad/s in einem Bereich von 0,1 bis 0,32 aufweist.

6. Optische Vorrichtung nach Anspruch 1, bei der die druckempfindliche Klebeschicht (10c) einen Speicherelastizitätsmodul von 10.000 Pa bis 1.100.000 Pa bei einer Temperatur von 25 °C und einer Frequenz von 1 rad/s aufweist.

7. Optische Vorrichtung nach Anspruch 1, bei der die druckempfindliche Klebeschicht (10c) einen Tangentendeltawert

von 0,1 bis 2,0 bei einer Temperatur von 25 °C und einer Frequenz von 1 rad/s aufweist.

8. Optische Vorrichtung nach Anspruch 1, die nacheinander ein erstes äußeres Substrat (101), eine erste Klebeschicht (301), die Flüssigkristallzelle (200), eine zweite Klebeschicht (302) und ein zweites äußeres Substrat (102) umfasst.

9. Optische Vorrichtung nach Anspruch 8, bei der das erste äußere Substrat (101) und das zweite äußere Substrat (102) jeweils ein Glassubstrat sind.

10. Optische Vorrichtung nach Anspruch 8, bei der die erste Klebeschicht (301) und die zweite Klebeschicht (302) jeweils eine thermoplastische Polyurethanklebeschicht, eine Polyamidklebeschicht, eine Polyesterklebeschicht, eine Ethylenvinylacetatklebeschicht, eine Acrylklebeschicht, eine Silikonklebeschicht oder eine Polyolefinklebeschicht sind.

11. Optische Vorrichtung nach Anspruch 8, die ferner einen ersten Polarisator (401) zwischen der ersten Klebeschicht (301) und der Flüssigkristallzelle (200) und einen zweiten Polarisator (402) zwischen der zweiten Klebeschicht (302) und der Flüssigkristallzelle (200) umfasst.

12. Optische Vorrichtung nach Anspruch 11, bei der die Übertragungsachse des ersten Polarisators (401) und die Übertragungsachse des zweiten Polarisators (402) orthogonal zueinander sind.

13. Optische Vorrichtung nach Anspruch 11, die ferner eine dritte Klebeschicht (303) zwischen dem ersten Polarisator (401) und der Flüssigkristallzelle (200) und eine vierte Klebeschicht (304) zwischen dem zweiten Polarisator (402) und der Flüssigkristallzelle (200) umfasst.

14. Optische Vorrichtung nach Anspruch 13, bei der die dritte Klebeschicht (303) und die vierte Klebeschicht (304) jeweils eine thermoplastische Polyurethanklebeschicht, eine Polyamidklebeschicht, eine Polyesterklebeschicht, eine Ethylenvinylacetatklebeschicht, eine Acrylklebeschicht, eine Silikonklebeschicht oder eine Polyolefinklebeschicht sind.

**Revendications**

1. Dispositif optique comprenant une cellule à cristal liquide (200) qui comprend

   un substrat supérieur incluant une première couche de base (10a) et une couche adhésive sensible à la pression (10c),
   un substrat inférieur incluant une deuxième couche de base (20a) et des espaceurs (20c) et
   une couche de cristal liquide (30) incluant un composé cristal liquide entre le substrat supérieur et le substrat inférieur, où
   le dispositif optique comprend en outre une première couche servant d'électrode (10b) entre la première couche de base (10a) et la couche adhésive sensible à la pression (10c) et comprend également une deuxième couche servant d'électrode (20b) entre la deuxième couche de base (20a) et les espaceurs (20c),
   **caractérisé en ce que**
   la couche adhésive sensible à la pression (10c) présente un module élastique de stockage égal ou supérieur à 18 000 Pa à une température de 110 °C et une fréquence de 1 rad/s et un facteur de perte (tangente delta) inférieur ou égal à 0,32 à une température de 110 °C et une fréquence de 1 rad/s.

2. Dispositif optique selon la revendication 1, où le substrat supérieur ne comprend pas un film d'alignement (20d) et où le substrat inférieur comprend en outre un film d'alignement (20d).

3. Dispositif optique selon la revendication 1, où la couche adhésive sensible à la pression (10c) comprend un adhésif siliconé sensible à la pression.

4. Dispositif optique selon la revendication 1, où la couche adhésive sensible à la pression (10c) présente un module élastique de stockage dans une plage de 18 000 Pa à 100 000 Pa à une température de 110 °C et une fréquence de 1 rad/s.

5. Dispositif optique selon la revendication 1, où la couche adhésive sensible à la pression (10c) présente un facteur de perte dans une plage de 0,1 à 0,32 à une température de 110 °C et une fréquence de 1 rad/s.

**6.** Dispositif optique selon la revendication 1, où la couche adhésive sensible à la pression (10c) présente un module élastique de stockage qui va de 10 000 Pa à 1 100 000 Pa à une température de 25 °C et une fréquence de 1 rad/s.

**7.** Dispositif optique selon la revendication 1, où la couche adhésive sensible à la pression (10c) présente un facteur de perte qui va de 0,1 à 2,0 à une température de 25 °C et une fréquence de 1 rad/s.

**8.** Dispositif optique selon la revendication 1 comprenant, dans l'ordre, un premier substrat extérieur (101), une première couche adhésive (301), la cellule à cristal liquide (200), une deuxième couche adhésive (302) et un deuxième substrat extérieur (102).

**9.** Dispositif optique selon la revendication 8, où le premier substrat extérieur (101) et le deuxième substrat extérieur (102) consistent chacun en un substrat vitreux.

**10.** Dispositif optique selon la revendication 8, où la première couche adhésive (301) et la deuxième couche adhésive (302) consistent chacune en une couche adhésive de polyuréthane thermoplastique, une couche adhésive de polyamide, une couche adhésive de polyester, une couche adhésive d'éthylène-acétate de vinyle, une couche adhésive d'acrylique, une couche adhésive de silicone ou une couche adhésive de polyoléfine.

**11.** Dispositif optique selon la revendication 8 comprenant en outre un premier polariseur (401) entre la première couche adhésive (301) et la cellule à cristal liquide (200) et un deuxième polariseur (402) entre la deuxième couche adhésive (302) et la cellule à cristal liquide (200).

**12.** Dispositif optique selon la revendication 11, où l'axe de transmission du premier polariseur (401) et l'axe de transmission du deuxième polariseur (402) sont orthogonaux l'un par rapport à l'autre.

**13.** Dispositif optique selon la revendication 11 comprenant en outre une troisième couche adhésive (303) entre le premier polariseur (401) et la cellule à cristal liquide (200) et une quatrième couche adhésive (304) entre le deuxième polariseur (402) et la cellule à cristal liquide (200).

**14.** Dispositif optique selon la revendication 13, où la troisième couche adhésive (303) et la quatrième couche adhésive (304) consistent chacune en une couche adhésive de polyuréthane thermoplastique, une couche adhésive de polyamide, une couche adhésive de polyester, une couche adhésive d'éthylène-acétate de vinyle, une couche adhésive d'acrylique, une couche adhésive de silicone ou une couche adhésive de polyoléfine.

[Figure 1]

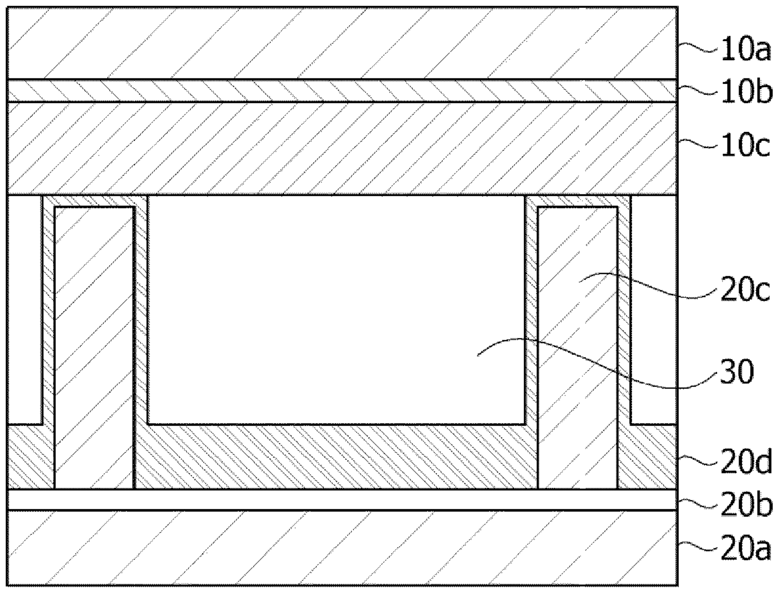


[Figure 2]

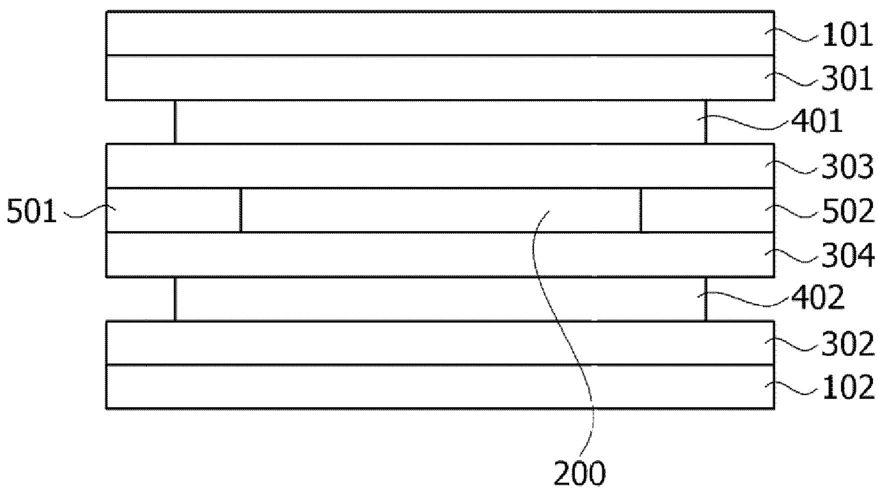

[Figure 3]

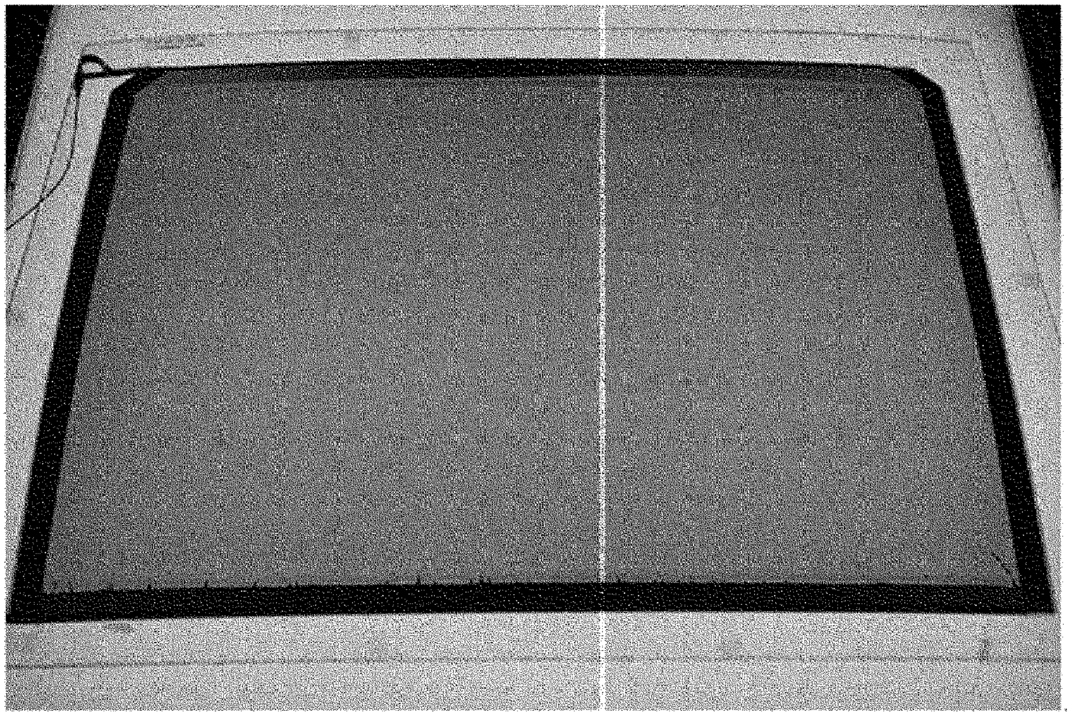

[Figure 4]

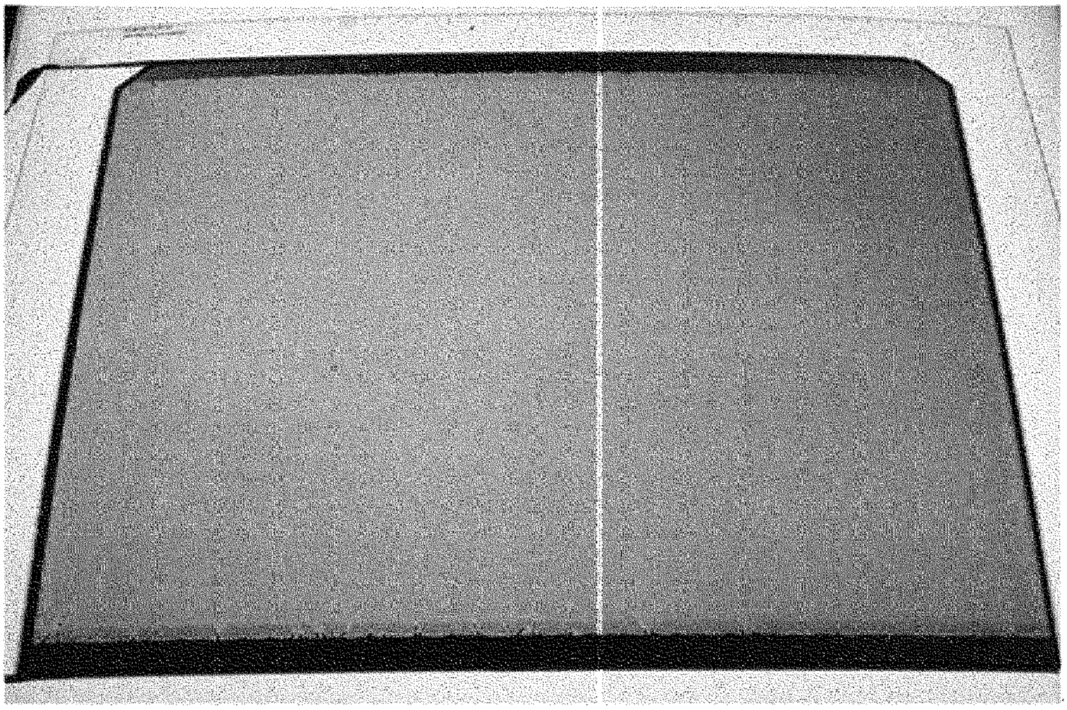

[Figure 5]

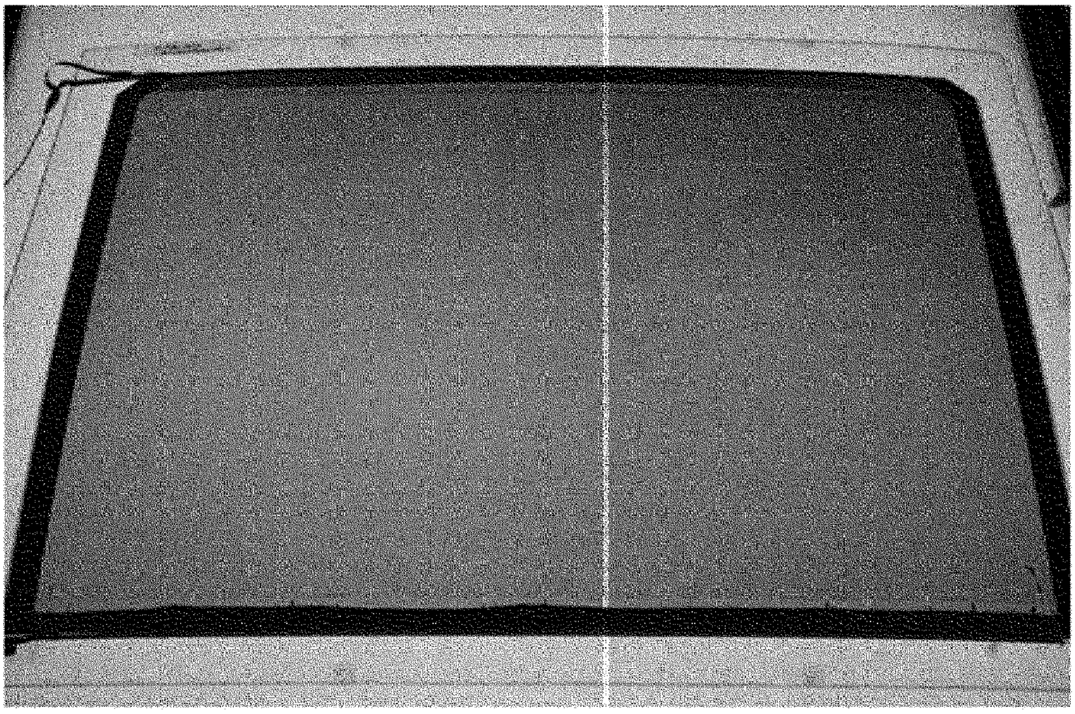

[Figure 6]

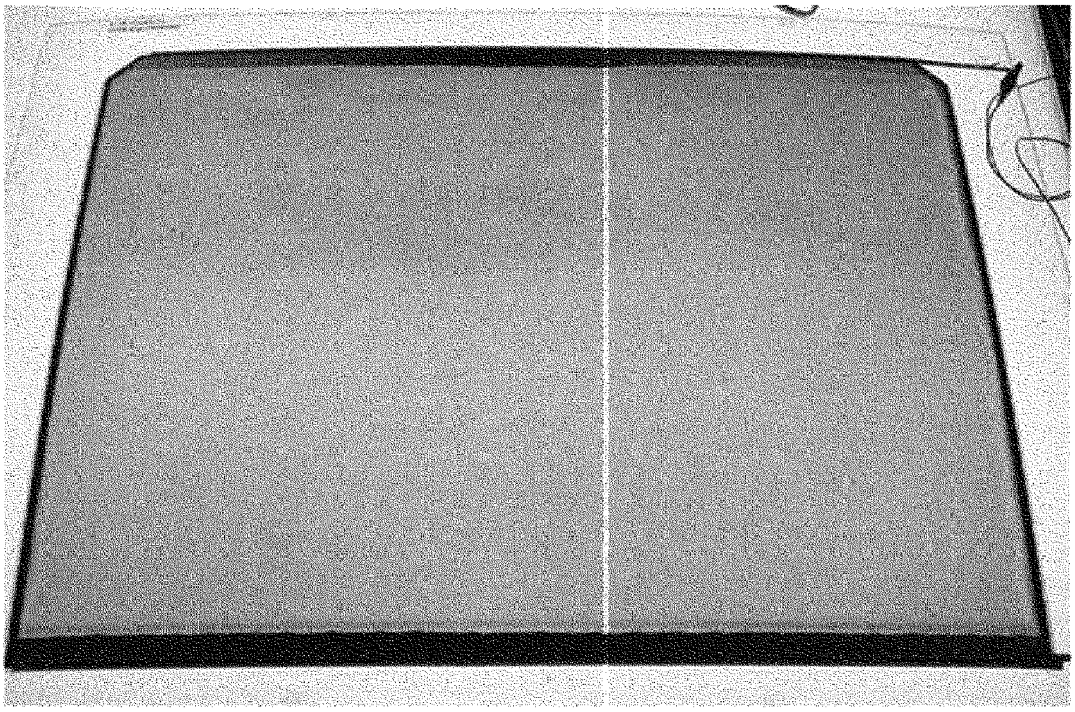

[Figure 7]

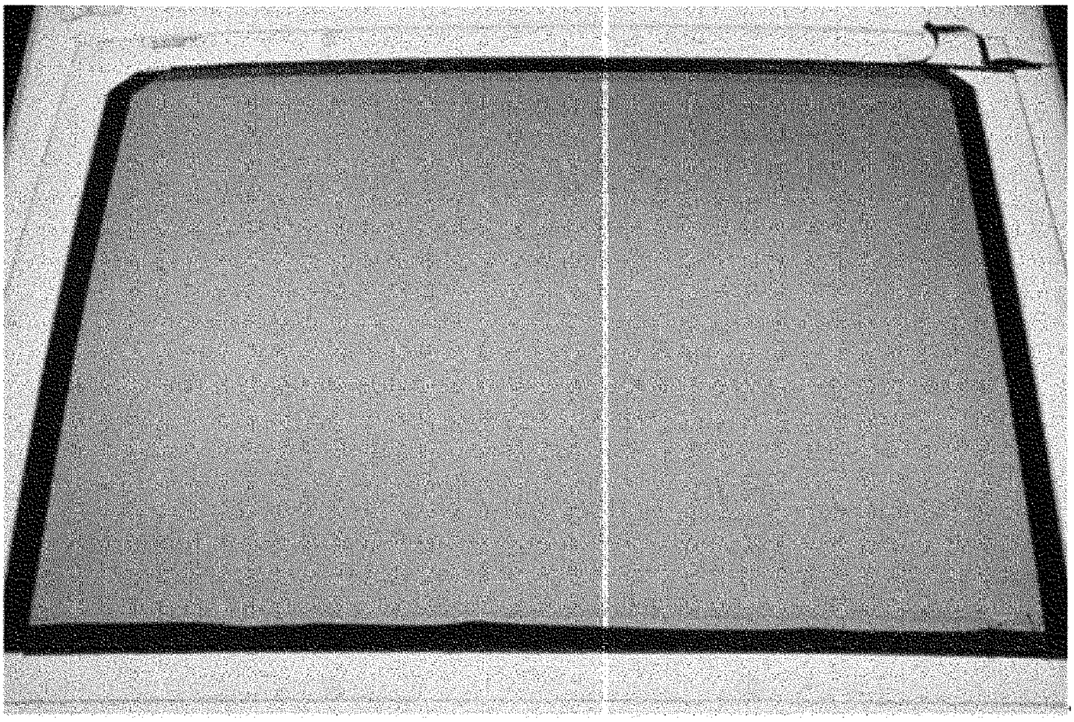

[Figure 8]

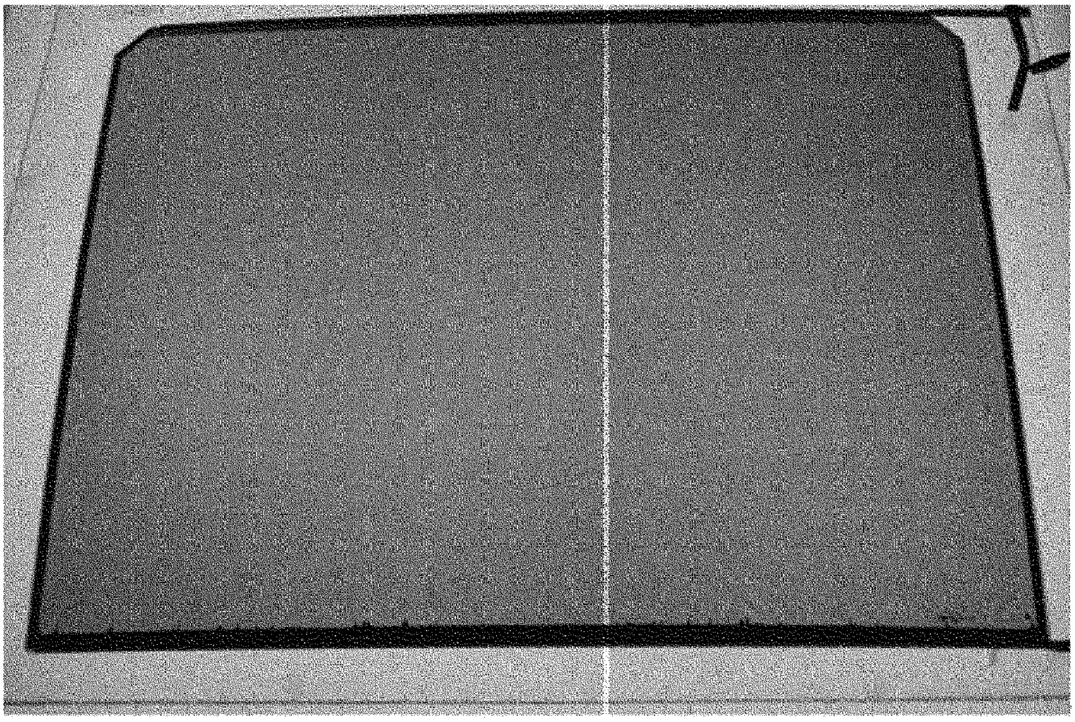

[Figure 9]

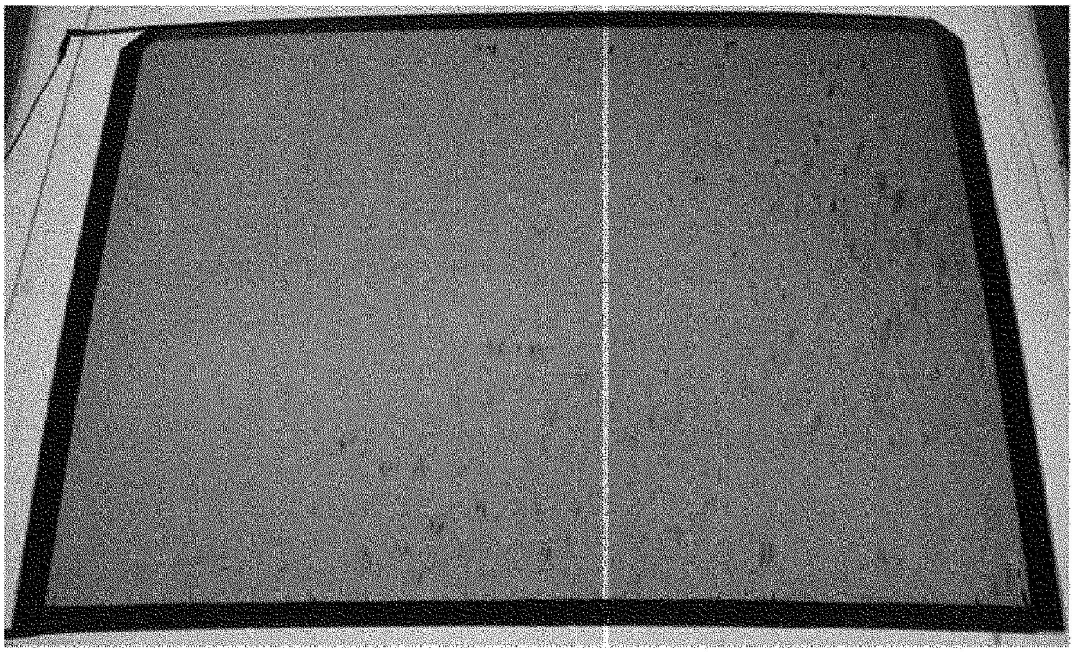

[Figure 10]

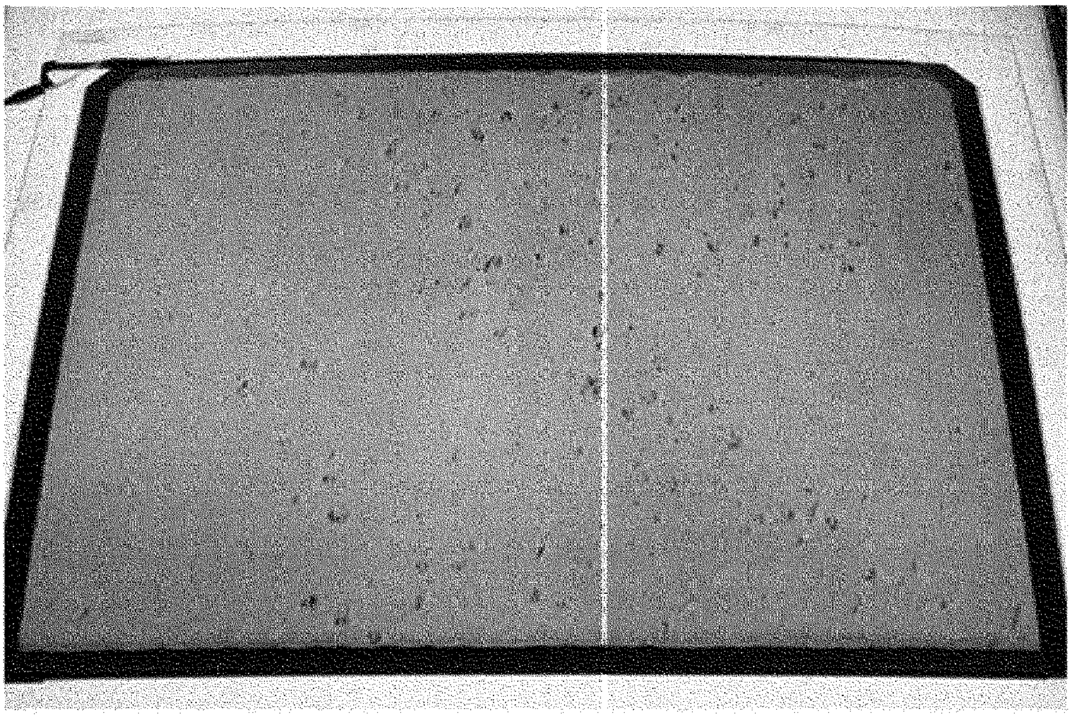

[Figure 11]

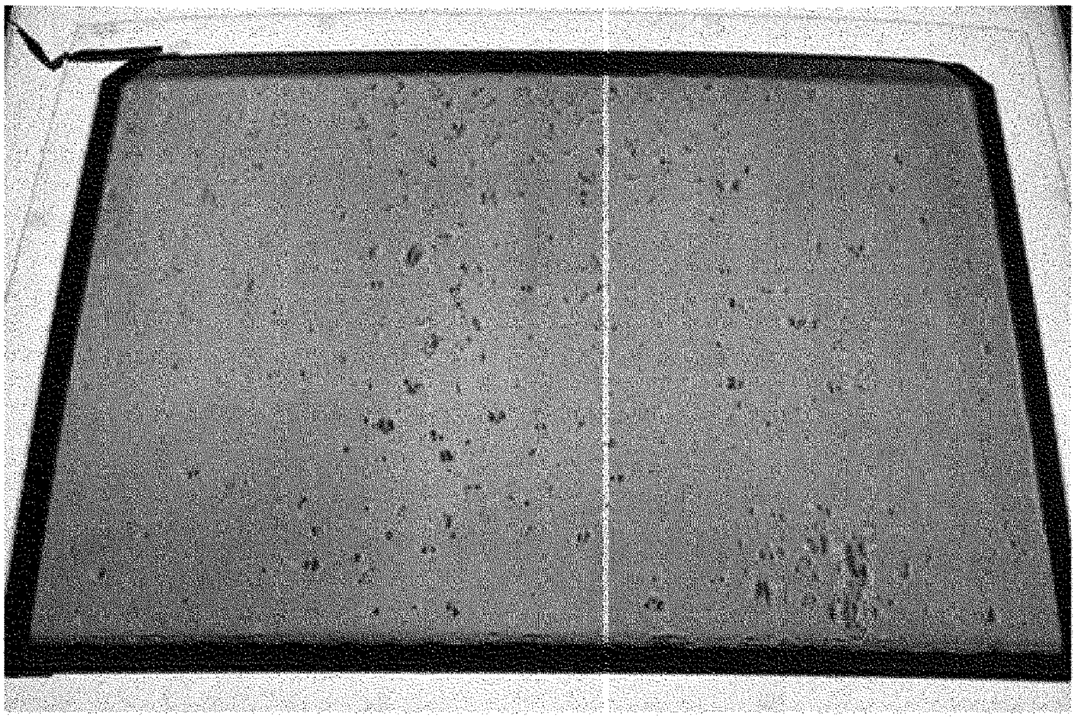

[Figure 12]

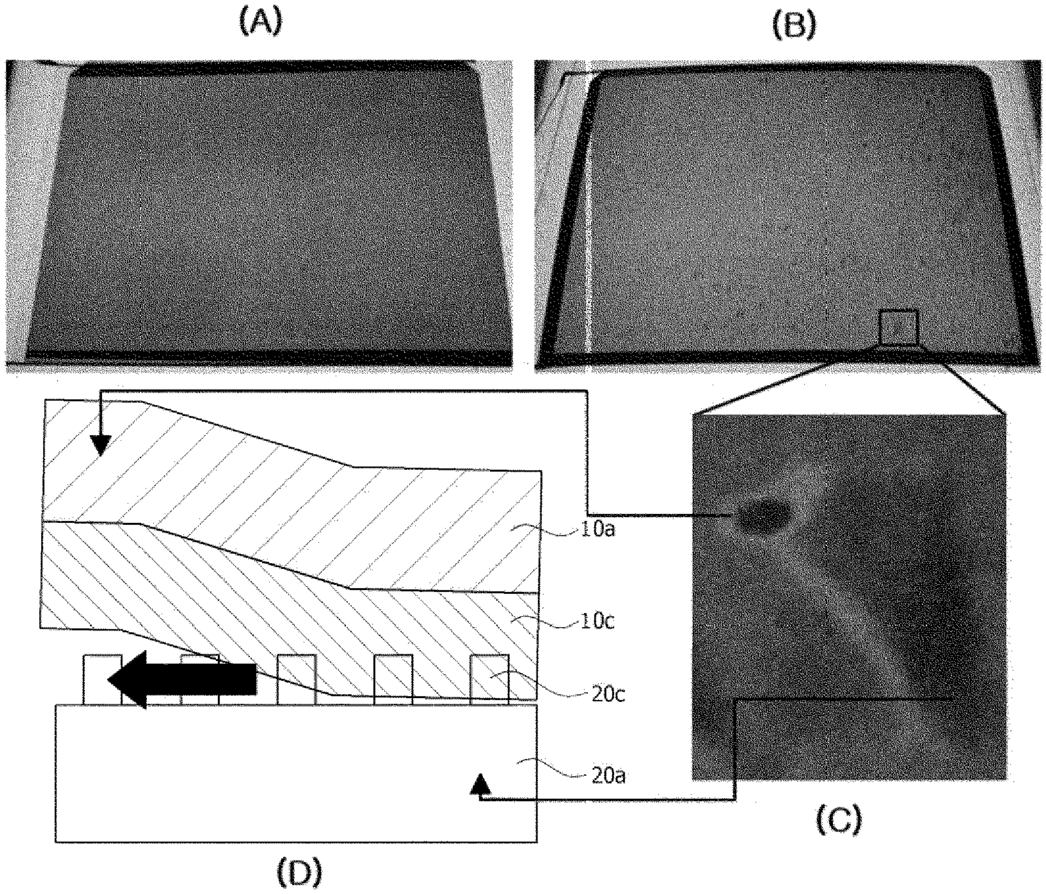

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 102022007333 A
- US 2020319504 A1
- WO 2022010185 A1


### Non-patent literature cited in the description


- Tight Bonding of Two Plastic Substrates for Flexible LCDs. *SID Symposium Digest*, 2007, vol. 38, 653-656
- **D. PODOLSKYY et al.** Simple method for accurate measurements of the cholesteric pitch using a ''stripe-wedge'' Grandjean-Cano cell. *Liquid Crystals*, July 2008, vol. 35 (7), 789-791